# EUROPEAN PATENT SPECIFICATION

(11) **EP 2 626 232 B1**
(45) Date of publication and mention of the grant of the patent: **29.06.2016**
(21) Application number: 13154367.0
(22) Date of filing: 07.02.2013
(51) Int. Cl.: B60L 11/18, B62M 6/90, H01R 13/627, H01R 13/631, H02B 1/044, H02B 1/048

(54) **Power supply device for electric vehicle**
Stromversorgungsvorrichtung für ein elektrisches Fahrzeug
Dispositif d'alimentation électrique pour un véhicule électrique

(30) Priority: 09.02.2012 JP 2012026128; 20.02.2012 JP 2012034057
(43) Date of publication of application: 14.08.2013
(73) Proprietor: Honda Motor Co., Ltd., Tokyo 107-8556 (JP)
(72) Inventor: Kawatani, Shinji, Wako-shi, Saitama 351-0193 (JP); Nakayama, Masaru, Wako-shi, Saitama 351-0193 (JP); Shokaku, Isao, Wako-shi, Saitama 351-0193 (JP)
(74) Representative: Stevens, Jason Paul

(56) References cited:
- EP-A2- 2 280 436
- DE-A1-102007 010 865
- US-A1- 2006 286 868

## Description

The present invention relates to a power supply device for an electric vehicle. More particularly, the invention relates to a power supply device for an electric vehicle which has a structure capable of absorbing dimensional errors at a connection part for connection between terminals on the side of a battery pack accommodating battery cells and terminals on the vehicle body side.

Conventionally, electric vehicles wherein a battery can be mounted to and detached from a vehicle body have been known. Japanese Patent No. 3676226 describes an inner case of a battery pack which has a metallic terminal to be electrically connected to a terminal on the vehicle body side. The metallic terminal is connected directly to a printed wiring board by soldering.

Therefore, if there is a positional discrepancy between the metallic terminal and the terminal on the vehicle body side, the discrepancy is absorbed by deflection of the metallic terminal. This leads to a durability problem, as the metallic terminal is deflected each time the battery pack is mounted to or detached from the vehicle body. EP2280436 proposes springs and bolts to hold a connector in a floating state with in the battery case in order to absorb vibrations and positional discrepancies.

It is an object of at least the preferred embodiments of the present invention to provide a power supply device for electric vehicle which is suitable for ensuring that, even in the presence of a positional discrepancy between connection terminals. on the battery pack side and those on the vehicle body side, the positional discrepancy is absorbed, and durability of the connection terminals is not damaged by deflection of the connection terminals when mounting or detaching the battery, thereby solving the above-mentioned problem.

According to a first aspect of the present invention, as set forth in claim 1, there is provided a power supply device for an electric vehicle, which comprises a battery case for accommodating battery cells for supplying electric power to an electric motor of an electric vehicle and which can be mounted to and detached from the electric vehicle, wherein the power supply device further comprises: an insulator block for accommodating battery case terminals which can be connected to vehicle body terminals provided on a body of the electric vehicle, and a plurality of ribs protruding inwardly from a wall of the battery case and disposed along an outer surface of the insulator block with a predetermined gap between themselves and the outer surface, in order to hold the insulator block inside the battery case; wherein the battery case is provided with an opening through which a part of the insulator block passes so that the battery case terminals are exposed to the outside; and wherein that part of the insulator block which passes through the opening is provided with two flanges making contact with an inner edge of the opening from the inside and outside of the battery case, such that an outer circumferential surface of an intermediate part defined between the two flanges is loosely fitted in the opening with a gap therebetween.

With this arrangement, the insulator block accommodating the battery case side terminals can be displaced relative to the battery case within the range of the gap G1. Therefore, even if there are positional errors between the battery case terminals and the vehicle body terminals which are to be coupled with the battery case terminals, the positional errors are absorbed by displacement of the insulator block. As a result, the battery case terminals and the vehicle body terminals are coupled together smoothly, so that durability of the battery case terminals and of the vehicle body terminals is enhanced.

In addition, since the insulator block is held in the floating state inside the battery case by the plurality of ribs, there is no need for fixation by screws or by soldering. Consequently, operability at the time of assembly is enhanced.

Preferably, the battery case is provided further with: a fuse which is located to the side of a harness extending from the battery case side terminals and which is connected to the harness; and a plurality of projecting parts for holding the fuse

Thus, the fuse is disposed in proximity to the battery case terminals. This ensures that the harness for connecting the battery case terminals and the fuse can be shortened.

Preferably, the battery case is comprised of a case front part located to the front of the vehicle when the battery case is mounted on the electric vehicle, and a case rear part located to the rear of the vehicle when the battery case is mounted on the electric vehicle; a first accommodation part for accommodating the battery cells, and a second accommodation part located below the first accommodation part for accommodating the fuse and the insulator block, are partitioned from each other; and the space defined between the front part and case rear part which forms the first accommodation part is sealed with a seal member.

Thus, the first accommodation part (which accommodates the battery cells) is sealed with the seal member.

Preferably, the battery case is provided with a drain hole in a lower wall of the second accommodation part.

With this arrangement, even if water enters the second accommodation part in which the battery case terminals and the fuse are accommodated, the water can be prevented from accumulating or stagnating in the second accommodation part.

Preferably, the fuse is disposed in proximity to the wall of the second accommodation part which is nearest to the first accommodation part.

Thus, even if water enters the second accommodation part, the fuse is provided near to the first accommodation part and is prevented from coming into contact by the water.

The invention also extends to an electric vehicle with a power supply device as specified above.

A preferred embodiment of the invention will now be described by way of example only and with reference to the accompanying drawings, in which:
Fig. 1 is a right side view of a part of an electric vehicle provided with a power supply device according to an embodiment of the present invention;
Fig. 2 is a left side view of a part of the electric vehicle provided with the power supply device according to the embodiment of the present invention;
Fig. 3 is a perspective view of a part of the electric vehicle, as viewed from a right front side;
Fig. 4 is a perspective view of a lock device, as viewed from a right upper side of the vehicle body;
Fig. 5 is a sectional view showing a section passing through a lock pin of the lock device, as viewed from the right side of the vehicle body;
Fig. 6 is a perspective view of a battery pack accommodated in a battery pack cover, as viewed from a right upper rear side of the vehicle body;
Fig. 7 is a perspective view of a terminal base fixed to the battery pack cover, as viewed from a right upper rear side of the vehicle body;
Fig. 8 is a perspective view of the terminal base with an insulator board fitted therein, as viewed from a right upper rear side of the vehicle body;
Fig. 9 is a perspective view of the terminal base, as viewed from a left lower rear side of the vehicle body;
Fig. 10 is a perspective view of the battery pack, as viewed from a left upper rear side of the vehicle body;
Fig. 11 is a perspective view of the battery pack, as viewed from a left lower front side of the vehicle body;
Fig. 12 is a view of a front part of a battery case, as viewed from the rear of the vehicle;
Fig. 13 is a view of a rear part of the battery case, as viewed from the front of the vehicle;
Fig. 14 is a view of the battery case, as viewed from the left side of the vehicle;
Fig. 15 is an enlarged perspective view of a part of the battery case;
Fig. 16 is a perspective view of a part of the battery case, as viewed from a left lower front side;
Fig. 17 is a similar perspective view of the same part with a fuse and a female-side terminal and an insulator block mounted thereto;
Figs. 18A to 18D are views showing the positional relationship between the battery pack and the terminal base during the mounting of the battery pack to the battery pack cover;
Figs. 19A to 19D are views showing the positional relationship between the battery pack cover as well as the terminal base and the battery pack, as viewed from a right upper rear side of the vehicle body, corresponding to Figs. 18A to 18D;
Fig. 20 is a view of a male-side terminal unit from the right side of the vehicle body;
Fig. 21 is a perspective view of the male-side terminal unit from a rear right lower side of the vehicle body;
Fig. 22 is a plan view of the male-side terminal unit;
Fig. 23 is a view of the male-side terminal unit from the front side of the vehicle body;
Fig. 24 is a perspective view of an insulator block 74 with female-side terminals accommodated therein, as viewed from a right lower front side of the vehicle body;
Fig. 25 is a perspective view of the insulator block with the female-side terminals accommodated therein, as viewed from a left upper rear side;
Fig. 26 is a sectional view of the insulator block, as viewed from the left side of the vehicle body, showing contact parts of the female-side terminals;
Figs. 27A to 27E are sectional views showing the positional relationship between the male-side terminal and the female-side terminal, as viewed from the rear side of the vehicle body;
Fig. 28 shows an enlarged view of a part of Fig. 27E;
Fig. 29 is a right side view of a part of a motorcycle provided with an under frame; and
Fig. 30 is an enlarged view of a part of Fig. 13.

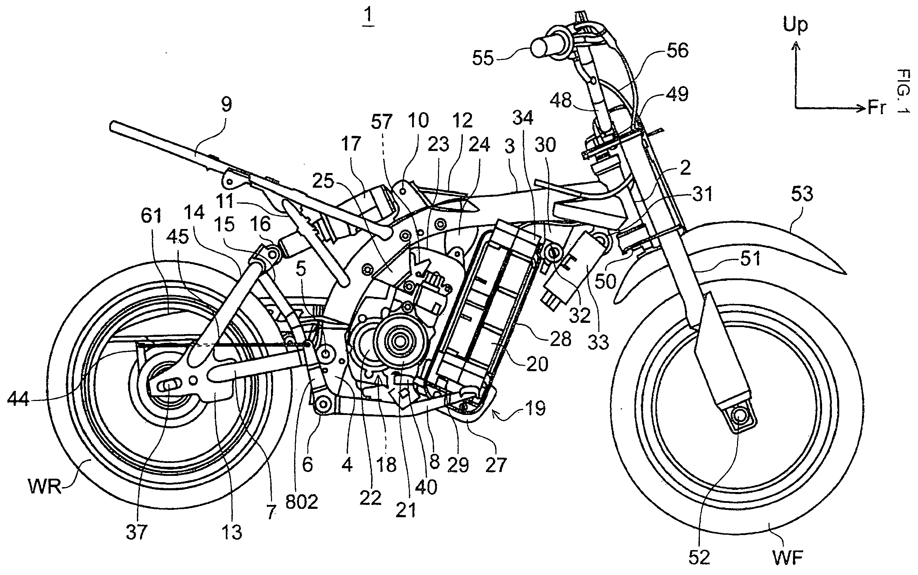

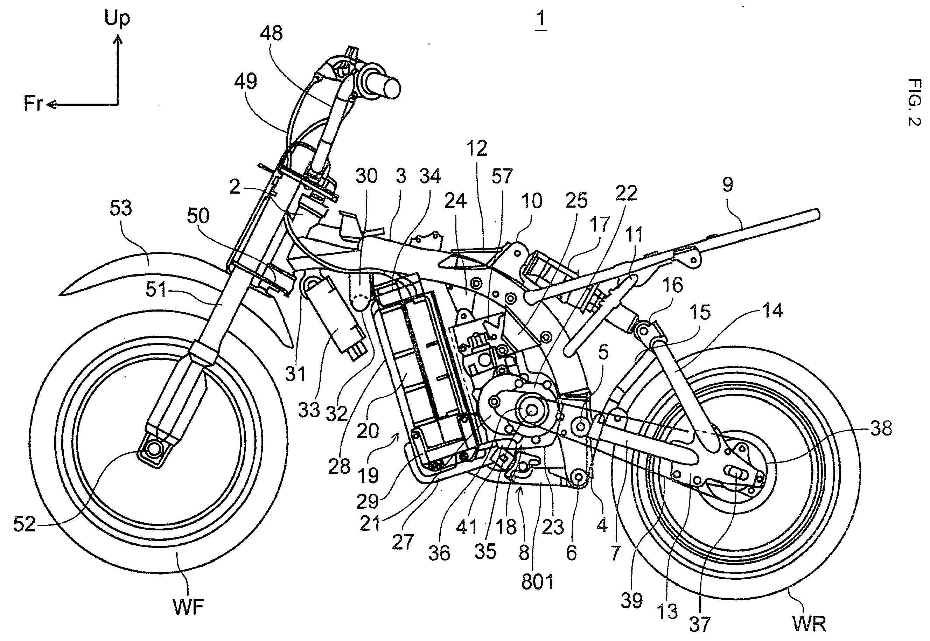

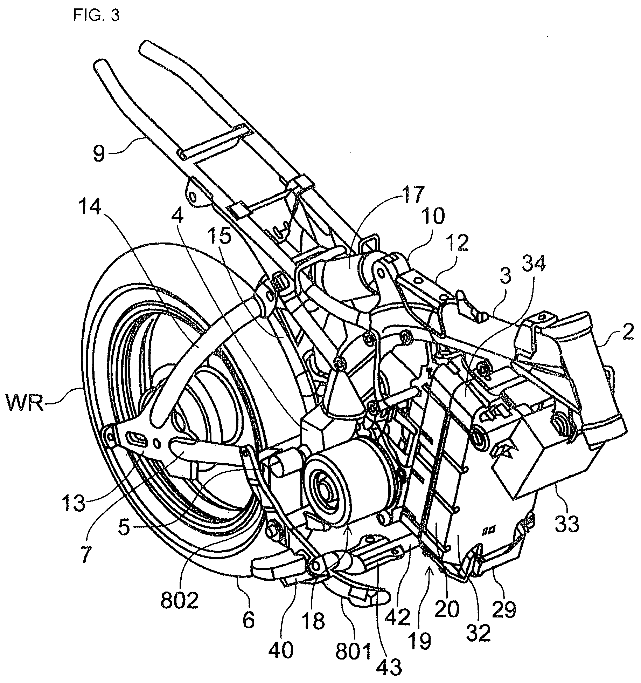

A preferred mode for carrying out the present invention will now be described with reference to the drawings. Fig. 1 is a right side view of a part of an electric vehicle provided with a power supply device according to an embodiment of the present invention; Fig. 2 is a left side view of the same; and Fig. 3 is a perspective view of a part of the electric vehicle as viewed from a right front side. A rider seat and cowls and the like are omitted from the drawings, to allow easier understanding of the configuration of the embodiment. In the drawings, the front of the electric vehicle 1 will be denoted by reference sign Fr, the rear by reference sign Rr, the left by reference sign L, the right by reference sign R, and the upper side by reference sign Up. Unless otherwise defined, the directions (sides) as used herein are with respect to the electric vehicle in use.

The electric vehicle 1 is a motorcycle of an off-road type in which an electric motor is used as a drive source (hereafter, the "electric vehicle" is referred to as a "motorcycle"). The motorcycle 1 has a main frame 3 which is joined to a head pipe 2 at a front end thereof and which extends downwards and rearwards. The main frame 3 has a monocoque body composed of an upwardly curved single pipe. The main frame 3 can be formed of any suitable material, and may be integrally formed with the head pipe 2.

Pivot plates 4 are joined to a lower rear portion of the main frame 3, and the pivot plates 4 are provided with a pivot 5 and a pivot 6 extending in the lateral (width) direction of the vehicle. The pivot 5 supports a pair of left and right swing arms 7 in a vertically swingable manner. The pivot 6, which is located below the pivot 5, supports a rear brake pedal 8, which is disposed on the right side of the electric motorcycle 1, in a vertically swingable manner. At a lower end portion of the pivot plate 4, a side stand (not shown) can be pivotally supported on the left side of the electric motorcycle 1.

A pair of left and right seat frames 9 and shock absorber front support brackets 10 are joined to a curved intermediate portion of the main frame 3. The shock absorber front support brackets 10 are reinforced with a stay 12. The seat frames 9 are joined to the main frame 3 at their front end portions, and extend toward the rear of the vehicle body. Sub frames 11 are provided, which are each joined to the main frame 3 and the seat frame 9 at front and rear ends thereof. The seat frames 9 are supported from below and reinforced by the sub frames 11.

Rear wheel support plates 13 are joined respectively to rear portions of the left and right swing arms 7. Furthermore, rear end portions of left and right sub pipes 14 are joined to upper portions of the rear wheel support plates 13, and the left and right sub pipes extend toward the front side of the vehicle body. Between the sub pipe 14 and the swing arm 7, a connection tube 15 is provided which interconnects them. A shock absorber rear support bracket 16 is joined to an upper portion of the sub pipe 14. A rear shock absorber 17 is provided, and is pivotally supported by the shock absorber front support brackets 10 and the shock absorber rear cushion support brackets 16. A rider seat (not shown) is mounted on the seat frames 9 and the main frame 3.

A driving device 18 is provided on the main frame 3, and a battery pack 19 provided on the main frame 3 and located forwardly of the driving device 18 serves as a power supply device. The battery pack 19 includes a plurality of battery cells (not shown) accommodated in a battery case 20. The driving device 18 includes an electric motor 21 and a reduction gear 22, and is covered with a driving device case (hereafter referred to as "motor case") 23. As the driving device 18 is covered with the motor case 23, it should be drawn in broken lines; however, for simplicity and to allow better understanding of its shape, the driving device 18 is shown in solid lines. The motor case 23 is connected to hanger brackets 24 and 25 and a pivot plate 4, whereby it is suspended at three positions. The battery pack 19 includes: a battery pack holding stay 27 connected to a lower portion of the motor case 23 and extending forward from the motor case 23; a battery pack cover 28 fixed to the battery pack holding stay 27; and a terminal base 29 fixed to a lower portion of the battery pack cover 28.

A lock device support stay 30 and a PDU bracket 31, which protrude downward, are joined to front portions of the main frame 3. A lock device 32 is mounted to the lock device support stay 30, which is located immediately forwardly of the battery pack 19, and a PDU (power drive unit) 33 is mounted to the PDU bracket 31, which is located near the head pipe 2. The PDU 33 is supplied with electric power from the battery pack 19, and performs digital phase control for the electric motor 21 in accordance with battery information (remaining battery power and the like), detection signals from various switches and sensors and the like provided on the motorcycle 1, and so on.

A handle 34 which can be used for carrying the battery pack 19 is provided at an upper portion located on the front right side of the battery case 20 of the battery pack 19. The handle 34 is formed with a lock pin engagement part for engagement with a lock pin which projects from the lock device 32; the lock pin and the lock pin engagement part will be described in detail later.

A driving sprocket 36 is connected to an output shaft 35 of the reduction gear 22. A rear wheel WR (which is a driven wheel) is supported on the rear wheel support plates 13 through a rear axle 37, and a driven sprocket 38 is connected to the rear axle 37. A drive chain 39 is arranged between the driving sprocket 36 and the driven sprocket 38, and the power of the electric motor 21 (reduced in speed by the reduction gear 22) is transmitted to the rear axle 37 through the driven sprocket 38. The drive chain 39 is provided with a chain cover 61 (shown in Fig. 1), which covers an upper portion thereof. Incidentally, the rear axle 37 and the driven sprocket 38 are interconnected through a one-way clutch, so that the power of the electric motor 21 is only transmitted to the rear wheel WR in the direction for forward motion of the motorcycle 1.

A step bar 42 extends in the lateral direction of the vehicle, and steps 40 and 41 on which the rider can put his or her feet are attached to the right and left ends of the step bar 42. The step bar 42 is attached to a bottom surface of the motor case 23 through a bracket 43. The rear brake pedal 8 which is supported on the pivot 6 includes a front arm part 801 operated by the rider's foot, and a rear arm part 802 which is connected through a brake cable 45 to an operation arm 44 of a rear brake (not shown) provided on the rear axle 37.

A steering shaft (not shown) extends generally vertically through the head pipe 2 and is turnably supported. A pair of vertically extending front forks 51 are connected to a top bridge 49 and a bottom bridge 50 which are connected respectively to upper and lower portions of the steering shaft. A front axle 52 extending in the lateral direction of the vehicle is supported by the lower ends of the front forks 51, and a front wheel WF is rotatably supported on the front axle 52. A front fender 53 located above the front wheel WF is mounted to the front forks 51.

A steering handlebar 48 is supported on the top bridge 49, and is provided with an accelerator grip 55. An accelerator cable 56 is connected to the accelerator grip 55. A turning amount of the accelerator grip 55 (accelerator position) is transmitted through the accelerator cable 56 to an accelerator position sensor (APS) 57 provided inside the motor case 23.

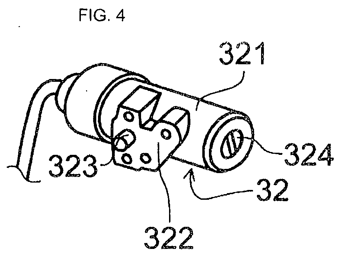

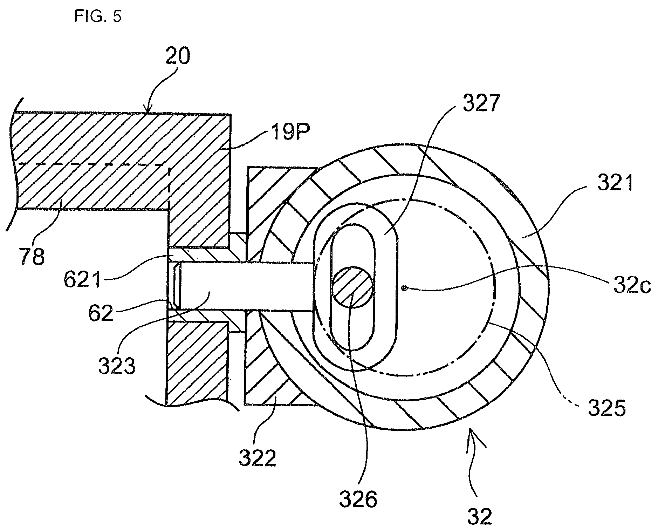

Fig. 4 is a perspective view of the lock device 32 as viewed from a right upper rear side of the vehicle body, and Fig. 5 is a sectional view showing a section passing through the lock pin of the lock device 32, as viewed from the right side of the vehicle body. The lock device 32 includes a cylinder part 321 having a hollow cylindrical shape, a lock pin guide 322 projecting rearwardly from one side of the cylinder part 321, and a movable lock pin 323 extending orthogonally to the cylinder part 321 and passing through the lock pin guide 322.

The cylinder part 321 is formed at its right end portion with a key hole 324, and a key (not shown) can be inserted in the key hole 324. A configuration is adopted wherein when the key is turned in a direction to turn the power supply on (for example, clockwise), the lock pin 323 is moved to project from the cylinder part 321, and when the key is turned in a direction to turn the power supply off, the lock pin 323 is retracted towards the cylinder part 321.

A mechanism for conversion of the rotating motion of the key into longitudinal (forward and rearward) motion of the lock pin 323 includes an inner tube disk 325 provided coaxially with the cylinder part 321, as shown in Fig. 5. In this mechanism, an eccentric shaft 326 provided on the inner tube disk 325 is engaged with an end portion (an annular portion protruding into the inside of the cylinder) 327 of the lock pin 323, so that the lock pin 323 can be made to project and retract according to the amount of eccentricity of the eccentric shaft 326 relative to the rotational centre 32c of the inner tube disk 325. The lock device 32 is mounted to the lock device support stay 30, and is positioned such that when the lock pin 323 projects, it is loosely fitted in an engagement hole 62 formed in the battery case 20. Of course, the advancing-and-retracting mechanism for the lock pin 323 is not restricted to the structure shown in Fig. 5, and can be replaced by any suitable mechanism.

The battery case 20 is preferably formed from a resin, from the viewpoint of reduced weight and easier production. For reinforcing the engagement hole 62, therefore, a reinforcement ring 621 made of metal, for example, may be fitted in the inner circumference of the engagement hole 62.

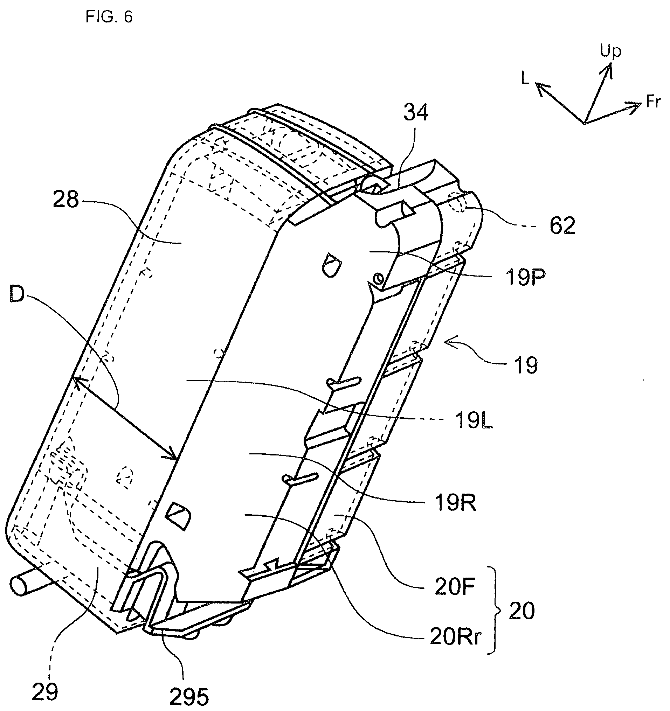

Fig. 6 is a perspective view of the battery pack 19 accommodated in the battery pack cover 28, as viewed from a right upper rear side of the motorcycle 1. The battery pack cover 28 has a shape that would be obtained by removing one surface (the surface on the right side of the vehicle body) of six surfaces which constitute a substantially rectangular parallelepiped shape. A depth D (the dimension in the lateral direction of the vehicle body) of the battery pack cover 28 is so set that the battery pack cover 28 covers only roughly the left half 19L of the battery pack 19. Therefore, roughly a right half 19R of the battery pack 19 is not covered by the battery pack cover 28, so that the right-side external appearance of the battery pack 19 can be seen externally.

The terminal base 29 is fixed to a bottom portion of the battery pack cover 28. The terminal base 29 is provided with a battery pack support part 295 which is engaged with a lower surface portion at a right side of the battery pack 19, namely, at its right half 19R (the half not covered with the battery pack cover 28).

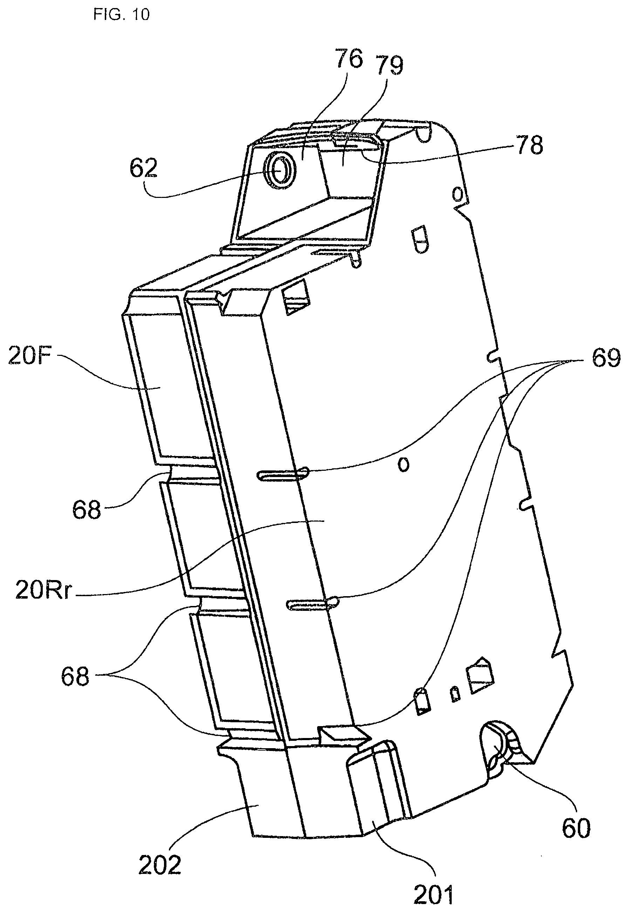

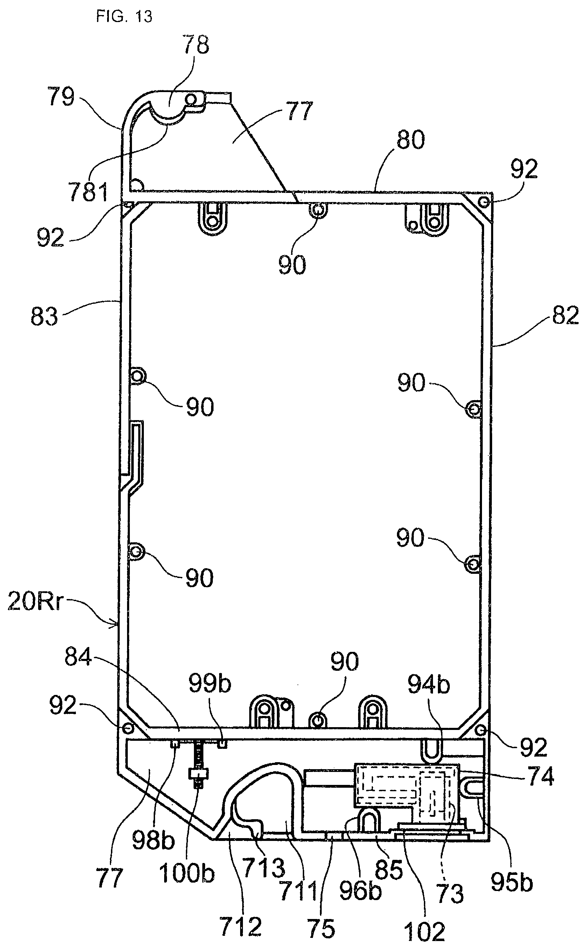

An upper portion of the right half 19R of the battery pack 19 extends above an upper end portion of the battery pack cover 28. This upper side extension 19P is provided with a recess which is recessed to the right from a part on the vehicle body left side. An upper wall forming the recess constitutes a grip part of the handle 34, and can be hooked by finger tips. The recess and the grip part constituting the upper wall of the recess will be described later, with particular reference to Figs. 10 and 13.

The battery case 20 of the battery pack 19 is composed of a front part 20F and a rear part 20Rr, such that the battery case 20 is bisected in the longitudinal direction of the vehicle. A front side surface of the front part 20F which forms the upper side extension 19P is formed with the engagement hole 62 in which the lock pin 323 projecting from the lock device 32 can be loosely fitted. The engagement hole 62 is formed in a wall surface of the front part 20F of the battery case 20, which is orthogonal to the grip part (described later) of the handle 34.

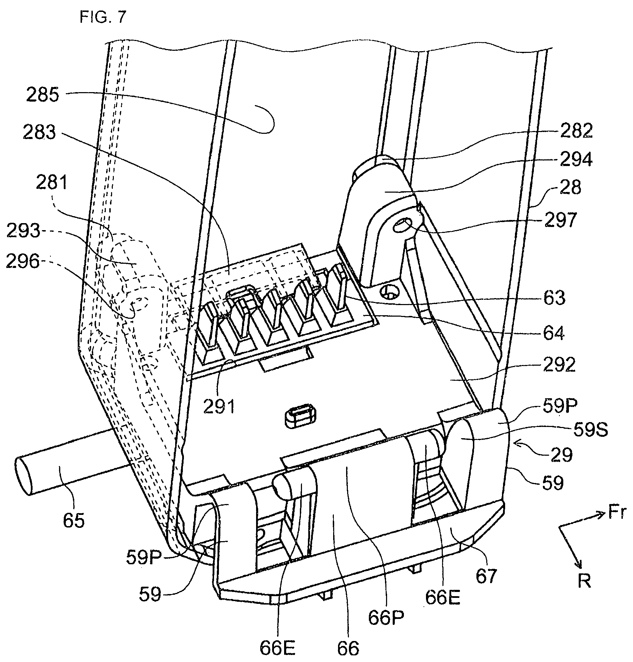

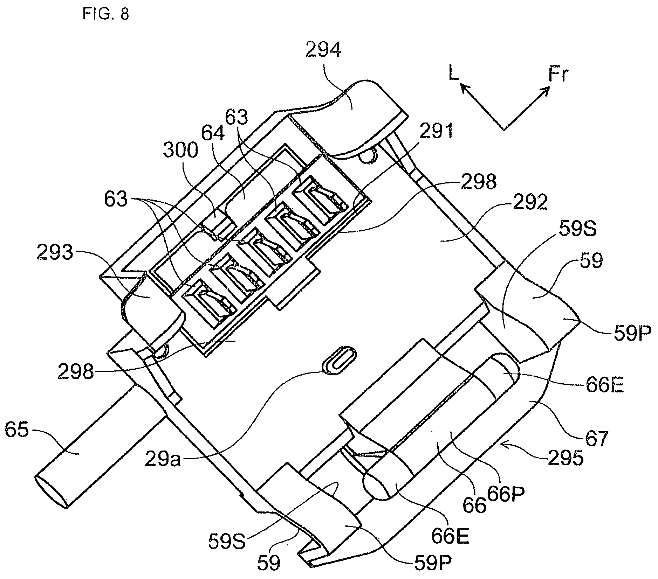

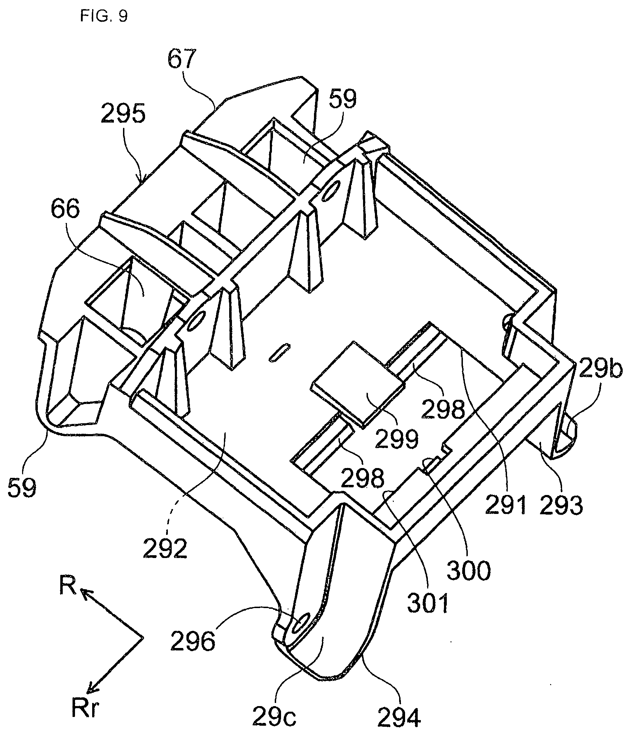

Fig. 7 is a perspective view of the terminal base 29 fixed to the battery pack cover 28, Fig. 8 is a perspective view of the terminal base 29 with an insulator board 64 fitted therein, as viewed from a right upper rear side of the vehicle body, and Fig. 9 is a perspective view of the terminal base 29 as viewed from a left lower rear side of the vehicle body. The terminal base 29 includes: a base 292 provided with an opening 291, into which can be fitted the insulator board 64 having mounted thereto a plurality of male terminals 63 arranged in a row in the longitudinal direction of the vehicle; mounting parts 293 and 294 protruding to the upper side of the base 292 and longitudinally spaced at a left side portion; and a battery pack support part 295 extending to the right in relation to the base 292. Between the opening 291 and the battery pack support part 295, a projecting part 29a for engagement with a bottom surface of the battery case 20 is formed on the base 292.

The mounting parts 293 and 294 are provided with inner circumferential surfaces 29b and 29c (see Fig. 9), to be located over bosses 281 and 282 formed at a left side of the battery pack cover 28. The mounting parts 293 and 294 are formed with bolt holes 296 and 297 extending in the lateral direction of the vehicle. Bolts or setscrews (not shown) can be passed through the bolt holes 296 and 297 from the right and screw engaged with screw holes (not shown) formed in the bosses 281 and 282 protruding from the battery pack cover 28, so that the terminal base 29 can be fixed to the battery pack cover 28.

On both longitudinal sides of the right edge of the opening 291, upper guides 298, 298 are formed to project along the upper surface of the base 292. In addition, the right edge of the opening 291 is provided with a lower guide 299 located between the upper guides 298, 298, and formed to project along the lower surface of the base 292. On the other hand, on both longitudinal sides of the left edge of the opening 291, a lower guide 301 is formed to project along the lower surface of the base 292. Further, at a longitudinally central portion of the left edge of the opening 291, a stopper 300 projects from the upper surface of the base 292.

A harness 65 is connected to the male terminals 63 and is led out towards the driving device 18. In the case of mounting the insulator board 64 to the base 292, the harness 65 is passed through the opening 291 from the upper side of the base 292 of the terminal base 29 to the lower side of the base 292. Then, while clamping one edge (the right edge) of the insulator board 64 between the upper guides 298, 298 and the lower guide 299, the lower surface of another edge (the left edge) of the insulator board 64 is brought into contact with the lower guide 301, and the stopper 300 is engaged with the upper surface, thereby fixing it. In Fig. 7, the battery pack cover 28 is formed with a rib 283 positioned between the bosses 281 and 282 and near the base 292. The rib 283 protrudes from a wall part (here, the left side wall 285) toward the right side. The position of the rib 283 relative to the terminal base 29 mounted in the battery pack cover 28 is set so that the rib 283 can cover the left edge of the insulator board 64 from above. The rib 283 contributes to a firmer positioning of the insulator board 64, which is locked to the terminal base 29 by the stopper 300, whereby the insulator board 64 is restrained from moving upward.

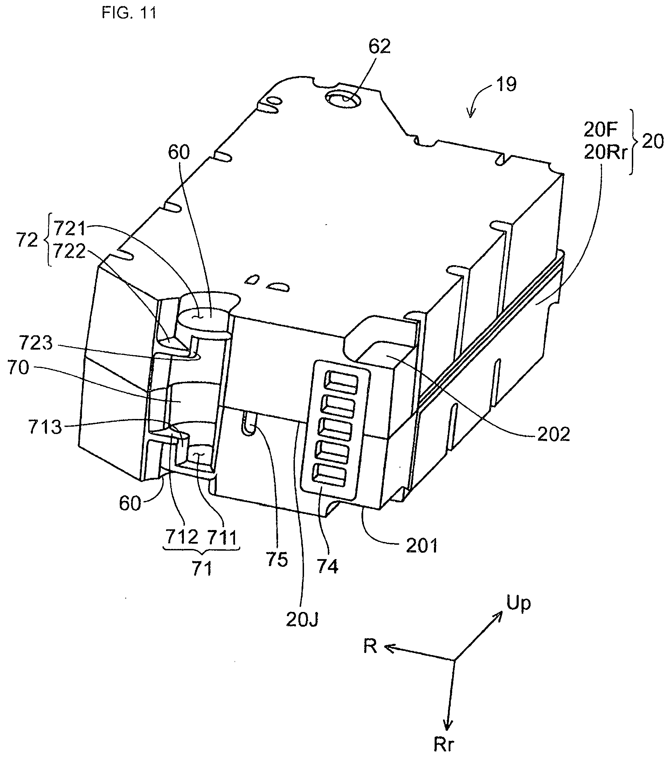

The battery support part 295 is provided with two end engagement projections 59, 59 aligned in the longitudinal direction, and with a central engagement projection 66 located between the end engagement projections 59, 59. The end engagement projections 59, 59 and the central engagement projection 66 are "vehicle body side engagement parts," and are provided at positions which are laterally offset to one side (in this example, to the right) from the vehicle body centre. The central engagement projection 66 is provided with a peak portion 66P including a cylindrical stopper 66E projecting towards the sides of the end engagement projections 59, 59 and which engages with the battery case 20 as will be described later. In spaces formed between the end engagement projections 59, 59 and the central engagement projection 66, ribs 711 and 712 (described later referring to Fig. 11) formed on a bottom portion of the battery case 20 are to be inserted. When mounting the battery pack 19 to the terminal base 29, mutually facing side surfaces 59S, 59S of the end engagement projections 59, 59 come into contact with side surfaces of the ribs 711 and 712 on the battery case 20, which are inserted between the end engagement projections 59, 59 and the central engagement projection 66. Thus, the side surfaces 59S, 59S can serve to guide the ribs 711 and 712 when mounting the battery pack 19 to the terminal base 29, and to position (and align) the battery pack 19 in the longitudinal direction of the vehicle.

The upper portion shapes of the peak portions 59P and 66P of the end engagement projections 59, 59 and the central engagement projection 66 are the same circular arc shape, and they are aligned in the longitudinal direction of the battery pack 19. Right-side foot portions of the end engagement projections 59, 59 and the central engagement projection 66 form a shelf 67, whereby the end engagement projections 59, 59 and the central engagement projection 66 are interconnected at their lower portions. As will be described later, the shelf 67 provides a base on which the battery pack 19 can be tentatively put at the time of mounting or detaching the battery pack 19 to or from the battery pack cover 28.

Fig. 10 is a perspective view of the battery pack 19 as viewed from a left upper rear side of the vehicle body, and Fig. 11 is a perspective view of the battery pack 19 as viewed from a left lower front side of the vehicle body. In Figs. 10 and 11, the front part 20F and the rear part 20Rr of the battery case 20 are coupled to each other by bolts or setscrews, to form the battery case 20 as a sealed casing.

At a circumferential edge of a surface (the front surface when the battery pack 19 is mounted on the vehicle) of the front part 20F of the battery case 20, notches 68 as relief portions for passing bolts or setscrew therethrough are formed in a plurality of positions. In addition, at a circumferential edge of the rear part 20Rr corresponding to the notches 68, screw holes 90 (described later with reference to Fig. 13) with which the bolts or setscrews passed from the front part 29F side are to be screw engaged are formed. In order not to elongate the screw holes 90 more than necessary, notches 69 are formed at the circumference of the rear part 20Rr. The screw holes are formed in the part near the front part 20F exclusive of the notches 69.

Lower corner parts 201 and 202 of the battery case 20 are recesses, which are cut out so as to avoid the mounting parts 293 and 294 formed on the terminal base 29. Further, at lower side surfaces (front and rear surfaces when the battery pack 19 is mounted on the vehicle) of the battery case 20, end engagement recesses 60 adapted to fit the end engagement projections 59, 59 of the battery support part 295 and a central engagement recess 70 adapted to fit the central engagement projection 66 of the battery support part 295 are formed. The end engagement recesses 60 and the central engagement recess 70 are partitioned by ribs 71 and 72 projecting from the bottom of the battery case 20. The ribs 71 and 72 are generally parallel to joint surfaces 20J of the front part 20F and the rear part 20Rr of the battery case 20. The ribs 71 and 72 each have two parts 711 and 712, and 721 and 722, and a step portion which is bent so as to extend orthogonal to the joint surfaces 20J.

Of the parts 711 and 712 of the rib 71 and the parts 721 and 722 of the rib 72, those parts 711 and 721 which are located on the outer side (here, the terms "inner" and "outer" are relative to the central plane 20J) make contact with the inside surfaces 59S, 59S (see Fig. 8) of the end engagement projections 59, 59. On the other hand, those parts 712 and 722 which are located on the inner side make contact with a downwardly extending outside portion of the peak portion 66P. The parts 711 and 712 of the rib 71 which make contact with the inside surfaces 59S, 59S of the battery case 20 function as a guide for restraining the position of the battery pack 19 in the longitudinal direction of the vehicle relative to the terminal base 292. A link part 713 linking the parts 711 and 712 of the rib 71 to each other and a link part 723 linking the parts 721 and 722 to each other are provided. The link parts 713 and 723 are each arc-shaped in side view of the battery pack 19 (a front or rear view with respect to the vehicle), and their inner circumferential surfaces (surfaces located near the upper side of the battery pack 19) are engaged with the stopper 66E of the central engagement projection 66 when the battery pack 19 is mounted on the terminal base 29.

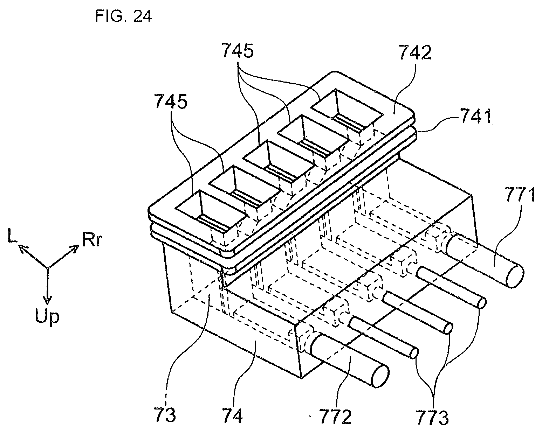

An insulator block 74 is mounted to a bottom portion of the battery case 20. The insulator block 74 is provided with female-side terminals 73 (described in detail later with reference to Figs. 24 to 26 etc.) into which can be inserted the male-side terminals 63 attached to the terminal base 29. The insulator block 74 can be formed from an electrically insulating elastic material, such as rubber or resin. The insulator block 74 is held between the front part 20F and the rear part 20Rr of the battery case 20, without using any fastening members such as bolts or setscrews. The mode of holding will be described later. The front part 20F of the battery case 20 is provided in its bottom portion with a cutout 75 into which can fit the projected part 29a formed on the terminal base 292. The cutout 75 is open on one side, and serves as a hole (fitting hole) into which can fit the projected part 29a.

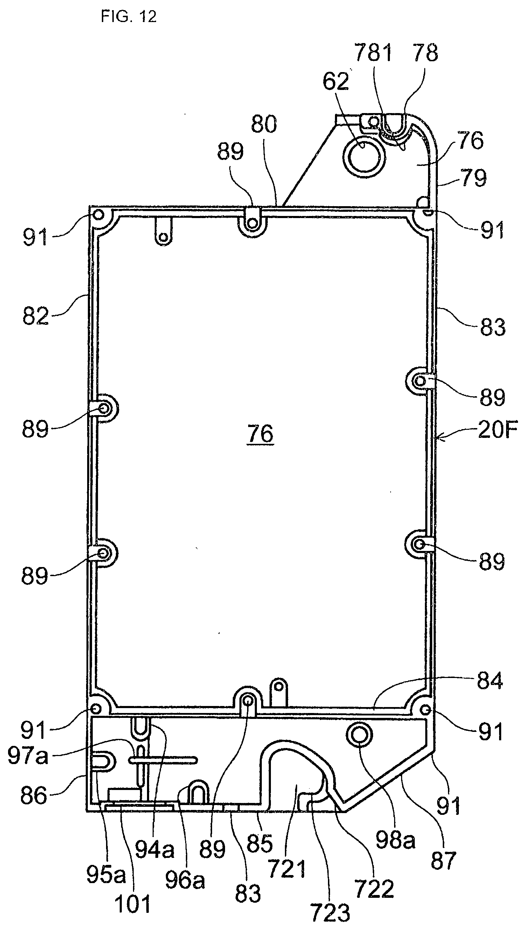

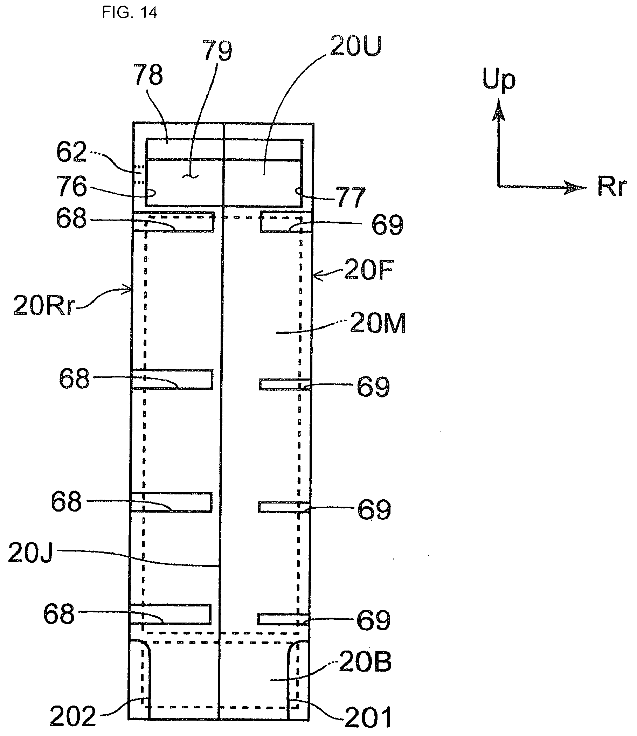

Fig. 12 is a view of the front part 20F of the battery case 20, as viewed from the rear of the vehicle, Fig. 13 is a view of the rear part 20Rr of the battery case 20, as viewed from the front of the vehicle, and Fig. 14 is a view of the battery case as viewed from the left side of the vehicle body. The front part 20F and the rear part 20Rr of the battery case 20 form an upper chamber 20U, a middle chamber 20M (first accommodation part) and a bottom chamber B (second accommodation part) when combined with each other (see Fig. 14). Incidentally, Fig. 13 shows a condition where the insulator block 74 with the female-side terminals 73 accommodated therein is held in the bottom chamber 20B.

The upper chamber 20U is formed as a recess which is surrounded by a front wall 76 and a rear wall 77, an upper wall 78 constituting the grip part of the handle 34, a vertical wall 79 extending downward from the upper wall 78, and an upper wall 80 of the middle chamber 20M, and which is opened on one side (the left side of the vehicle). The grip part, or the upper wall 78, has a partially cylindrical projection 781 which extends in the front-rear direction of the battery pack 19 (substantially the same direction as the longitudinal direction of the vehicle), which can be hooked by a user's fingers, and which projects downwards. The engagement hole 62 in which the lock pin can fit is formed in the front wall 76 of the front part 20F, at a position separated from the grip part 78.

The middle chamber 20M is a chamber which can accommodate a plurality of battery cells (not shown). The middle chamber 20M is surrounded by the front wall 76 and the rear wall 77, the upper wall 80, left and right walls 82 and 83, and a bottom wall 84 (which is common with an upper wall of the bottom chamber 20B).

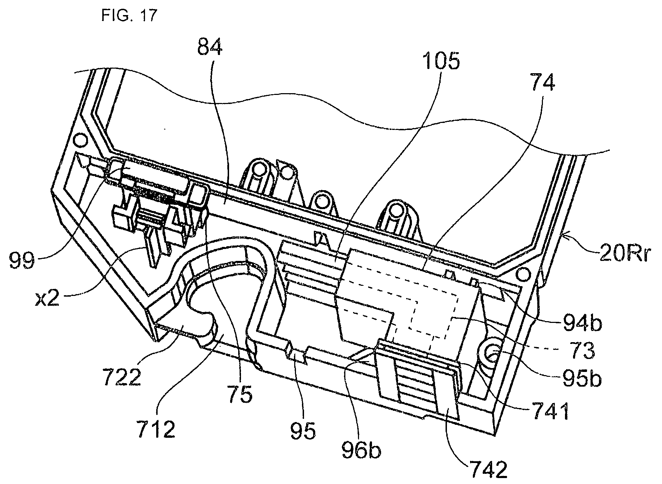

The bottom chamber 20B is surrounded by the front wall 76 and the rear wall 77, the upper wall 84 (which is common with the bottom wall of the middle chamber 20M), a bottom wall 85, a left wall 86 and a right wall 87. The bottom chamber 20B is a chamber which can accommodate the female-side terminals 73, the insulator block 74, and a fuse 88. The fuse 88 will be described later, with reference to Fig. 17.

The front part 20F of the battery case 20 is provided with screw passing holes 89 through which bolts or setscrews can be passed. The rear part 20Rr of the battery case 20 is formed with screw holes 90 at positions corresponding to the screw passing holes 89. In addition, pins 91 for positioning are located on one of the front part 20F and the rear part 20Rr (here, the front part 20F) of the battery case 20, and the other (here, the rear part 20Rr) is formed with pin holes 92 in which the pins 91 can fit.

In relation to the walls 80, 82, 83 and 84 forming the middle chamber 20M, it is desirable to dispose a packing or seal at the joint surfaces 20J of the front part 20F and the rear part 20Rr.

The front part 20F of the battery case 20 forming the bottom chamber 20B is provided with: a rib 94a projecting from the upper wall 84 into the bottom chamber 20B; a rib 95a projecting from the left wall 86 into the bottom chamber 20B; a rib 96a projecting from the bottom wall 85 into the bottom chamber 20B; and a rib 97a projecting from the front wall 76 into the bottom chamber 20B.

Similarly, the rear part 20Rr of the battery case 20 which forms the bottom chamber 20B is provided with: a rib 94b projecting from the upper wall 84 into the bottom chamber 20B; a rib 95b projecting from the left wall 86 into the bottom chamber 20B; a rib 96b projecting from the bottom wall 85 into the bottom chamber 20B; and a rib 97b projecting from the rear wall 77 into the bottom chamber 20B. The ribs 95a and 95b, the ribs 96a and 96b, and the ribs 97a and 97b are located so as to face each other when the front part 20F and the rear part 20Rr are combined with each other; these ribs cooperate in holding the female-side terminals 73 and the insulator block 74 (described later).

Furthermore, the front part 20F of the battery case 20 which forms the bottom chamber 20B is formed with a boss 98 as a protruded part projecting from the front wall 76. On the other hand, the rear part 20Rr of the battery case 20 is provided with ribs 98b, 99b and 100b as protruded parts which project into the bottom chamber 20B from the upper wall 84 and the rear wall 77 forming the bottom chamber 20B. The ribs 98b, 99b and 100b cooperate with the boss 98B in holding a fuse 99 (described later) when the front part 20F and the rear part 20Rr are combined with each other.

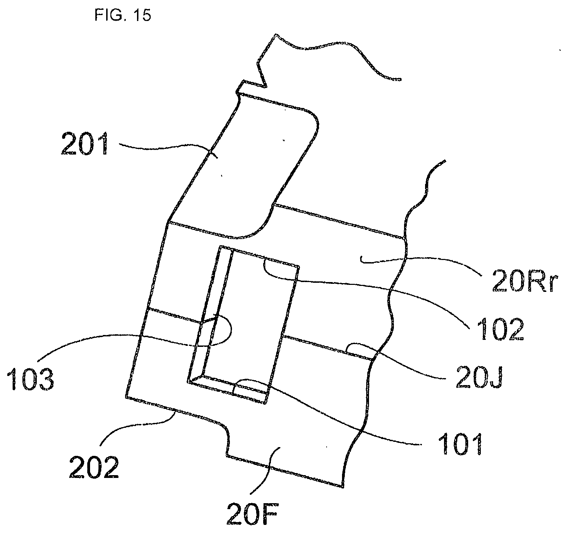

The front part 20F and the rear part 20Rr of the battery case 20 forming the bottom wall 85 of the bottom chamber 20B are formed respectively with cut-outs 101 and 102 for receiving an end portion of the insulator block 74. When the front part 20F and the rear part 20Rr are combined with each other, the cut-outs 101 and 102 form a substantially rectangular opening 103 (see Fig. 15) which can receive and hold an end portion of the insulator block 74.

Fig. 15 is an enlarged view of a part of the battery case 20. As shown in Fig. 15, the cut-outs 101 and 102 formed respectively in the joint surfaces 20J of the front part 20F and the rear part 20Rr form the opening 103 in a bottom portion of the battery case 20.

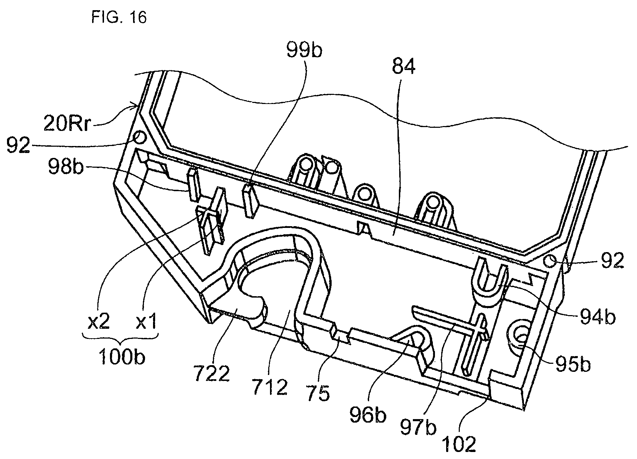

Fig. 16 is an enlarged perspective view of a lower portion of the rear part 20Rr of the battery case 20, and Fig. 17 is an enlarged perspective view of a lower portion of the rear part 20Rr with the fuse 99 and the female-side terminals 73 and the insulator block 74 mounted in position. As can be seen from Fig. 16, the ribs 94b, 95b and 96b each have a partially cylindrical shape, while the rib 97b is cross-shaped as viewed in the longitudinal direction of the vehicle.

Ribs 98b and 99b extend in the longitudinal direction of the vehicle when the battery case 20 is mounted to the vehicle, and they are disposed parallel to each other. Rib 100b is composed of: a part x1 which is parallel to the ribs 98b, 99b and is shorter than the ribs 98b, 99b in height (the dimension along the longitudinal direction of the vehicle when the battery case 20 is mounted to the vehicle body); and a part x2 which has a greater height than the part x1 and is T-shaped as viewed in the longitudinal direction of the vehicle.

In the mounted state as shown in Fig. 17, the fuse 99 is seated on the part x1 of the rib 100b, and is clamped between the ribs 98b and 99b and the T-shaped part x2 of the rib 100b. Specifically, the fuse 99 is held by the plurality of ribs 98b, 99b and 100b at a position near to the wall 84 of the bottom chamber 20B which separates the bottom chamber 20B and the middle chamber 20M. In addition, the insulator block 74 is seated on the rib 97b shown in Fig. 16, and is held between the partially cylindrical members constituting the ribs 94b, 95b and 96b.

The insulator block 74 holds the female-side terminals 73, and accommodates electric wires 771 and 772 and a signal line 773 (referred to as "harness 105"), which extend from the female-side terminals 73 toward the fuse 99.

The fuse 99 and the insulator block 74 are adjacent to each other, and the harness 105 connected to the female-side terminals 73 extends towards the fuse. Therefore, the length of the harness 105 between the female-side terminals 73 and the fuse 99 can be reduced.

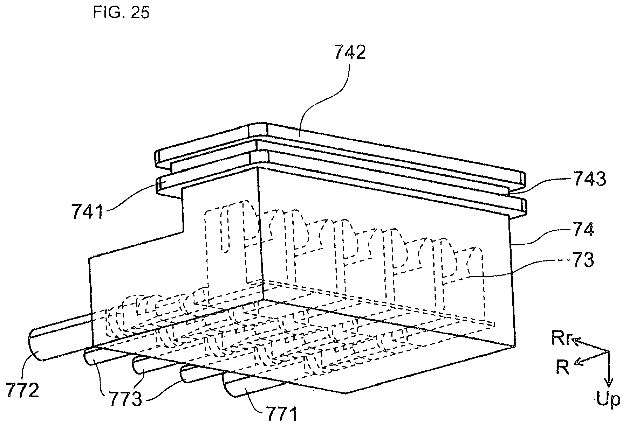

The insulator block 74 is provided with flange parts 741 and 742, by means of which the circumferential edge of the opening 103 (formed by the combination of the cut-outs 101 and 102 provided in the bottom wall 85 of the battery case 20) is clamped from the inside and the outside of the bottom chamber 20B. The outer circumferential shape of that part 743 of the insulator block 74 which is located between the flanges 741 and 742 (see Fig. 25) is set to have such dimensions as to fit the inner circumference of the opening 103.

When the outer circumferential shape of the part 743 located between the flange parts 741 and 742 is set to be smaller than the inner circumference of the opening 103, thereby forming a gap between the inner circumference of the opening 103 and the intermediate part 743 and thus achieving loose fitting, the insulator block 74 can be displaced along the lower wall 85 within the range of the gap. As a result, dimensional errors between the battery case 20 and the terminal base 29 are absorbed, coupling between the male-side terminals 63 and the female-side terminals 73 is performed smoothly, and durability of the terminals is enhanced.

Incidentally, when dimensions are set so that the intermediate part 743 is loosely fitted in the opening 103, it is recommended to also provide a gap between the insulator block 74 and the ribs 94b, 95b and 96b holding the insulator block 74, so that the insulator block 74 can be displaced.

In this manner, the fuse 99 and the insulator block 74 can be held in a floating state in the battery case 20 by combination or assembly of the front part 20F and the rear part 20Rr of the battery case 20, without using any fastening part such as bolts or setscrews and without joining by soldering or the like.

The cutout 75 provided in a lower portion of the bottom chamber 20B of the battery case 20 accommodating the fuse 99 and the insulator block 74 (in the lower wall of the battery case 20) is an opening into which can fit the projected part 29a; at the same time, the cutout 75 can act as a drain hole for water which may have entered into the bottom chamber 20B.

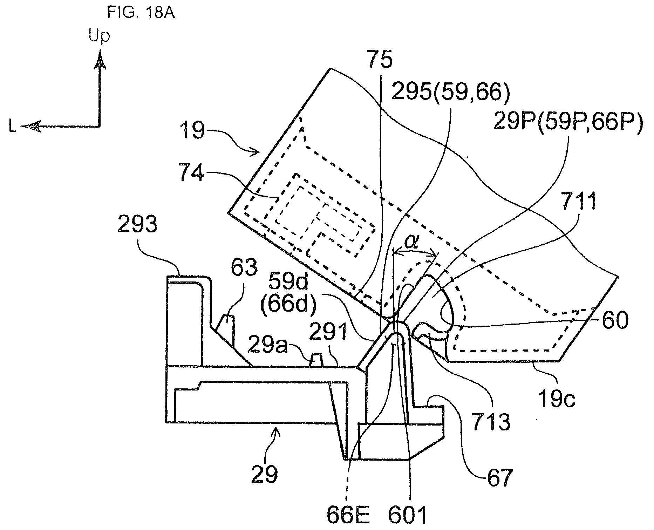

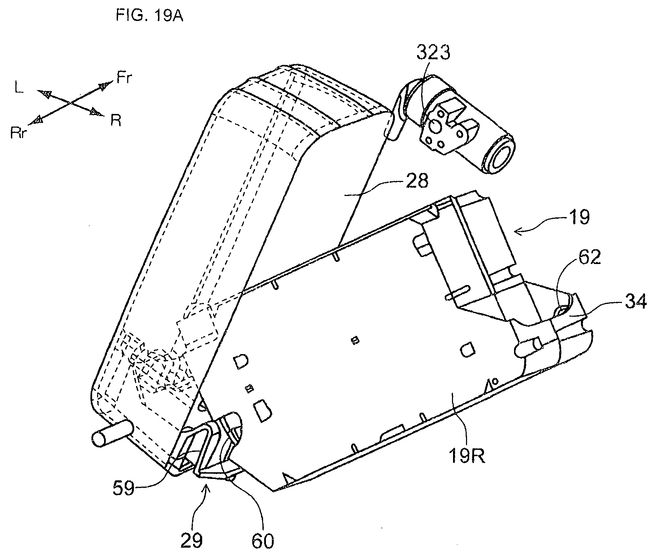

The procedure and operations in mounting the battery pack 19 to the battery pack cover 28 will now be described. Figs. 18A to 18D are views from the rear of the vehicle showing the positional relationship between the battery pack 19 and the terminal base 29 at the time of mounting the battery pack 19 to the battery pack cover 28. Figs. 19A to 19D are views showing the positional relationship between the battery pack cover 28 as well as the terminal base 29 and the battery pack 19, as viewed from a right upper rear side of the vehicle body, corresponding respectively to Figs. 18A to 18D. At the time of an operation of mounting or detaching the battery pack 19, the motorcycle 1 is left standing in a leftwardly inclined posture by use of the side stand. Therefore, the terminal base 29 is not set upright but is inclined to the left by an angle of about 12 degrees, for example. For simplification, however, the motorcycle 1 is shown upright in Figs. 18A to 18D and Figs. 19A to 19D.

In Figs. 18A to 18D, the battery pack support part 295 composed of the end engagement projections 59, 59 and the central engagement projection 66 has slant surfaces 59d, 66d formed to slant down toward the right side of the vehicle from a peak portion 29P (composed of the peak portions 59P, 66P). The slant surfaces 59d, 66d have an angle α relative to the base 292, and the angle α may, for example, be 35 degrees).

First, as shown in Figs. 18A and 19A, the battery pack 19 is brought closer to the terminal base 29 from a right upper side of the vehicle. It is recommended that the user grips the handle 34 with the right hand and supports the part 19R, on the side where the handle 34 is formed, with the left hand. In this case, the battery pack 19 is brought closer to the terminal base 29 in such a manner that the vertical walls of the end engagement recesses 60 and the central engagement recess 70 formed by the rib 71 and the rib 72 provided at a bottom portion of the battery case 20 (the vertical wall 601 of the end engagement recess 60 is taken as a representative of these vertical walls in the description here) are directed substantially along the slant surfaces 59d, 66d of the battery pack support part 295, and the peak portion 29P of the battery pack support part 295 is opposed to the end engagement recesses 60 and the central engagement recess 70 from the lower side of the battery pack 19.

Incidentally, as described referring to Fig. 11, the rib 71 is composed of the parts 711 and 712, while the rib 72 is composed of the parts 721 and 722. In addition, the peak portion of the battery pack support part 295 is composed of the peak portions 59P and 66P.

In the position shown in Fig. 18A and Fig. 19A, the battery pack cover 28 is only covers one side of the terminal base 29 (the side on the left of the vehicle and on which the male-side terminals 63 are provided), and does not cover the battery pack support part 295. This allows the user to clearly recognize visually the positional relationship between the end engagement projections 59 and the end engagement recesses 60.

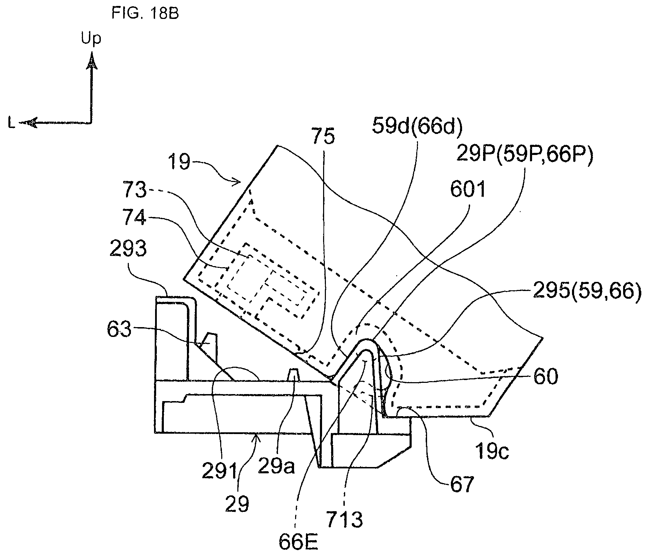

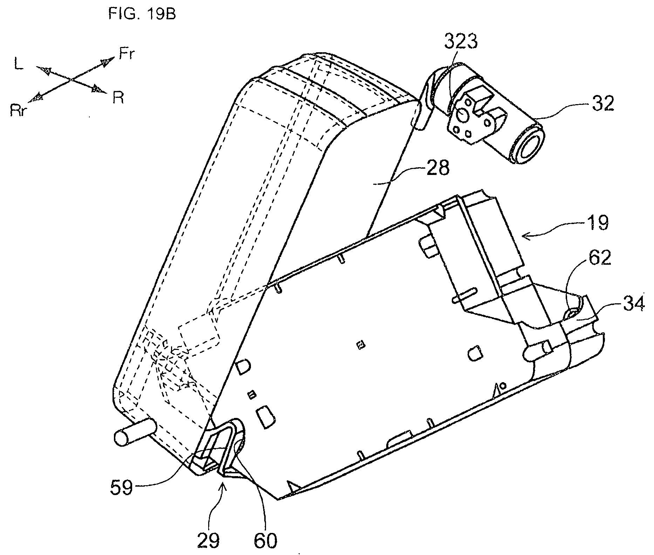

Next, starting from the posture as shown in Figs. 18A and 19A, the hand supporting the battery pack 19 is slightly loosened. As a result, the battery pack 19 slides downward on the vertical wall 601 along the slant surfaces 59d, 66d, to be moved into the position as shown in Figs. 18B and 19B. In the position as shown in Figs. 18B and 19B (the tentatively placed position), the peak portion 29P of the battery pack support part 295 has reached a point at which it makes contact with the internal surface of the uppermost portions of the end engagement recesses 60. In this case, a surface 19c formed by cutting off a corner of a bottom portion of the battery pack 19 (the corner located on the right relative to the vehicle body) makes contact with the upper surface of the shelf 67 of the battery pack support part 295. Incidentally, at a lower surface of the battery case 20 (which is generally shaped as a roughly rectangular parallelepiped), the slant surface 19c extends from the lower open end portions of the end engagement recess 60 and the central engagement recess 70 toward the surface adjacent to the lower surface which is adjacent on the side of protrusion of the shelf 67.

Therefore, in this position, it is ensured that even if the operator further loosens the hand supporting the battery pack 19, the battery pack 19 is tentatively placed on the terminal base 29 by only lightly supporting the battery pack 19. Thus, during the operation of mounting the battery pack 19 (which is comparatively heavy), the hand gripping the battery pack 19 can be loosened, which is effective in alleviating the burden in the mounting operation.

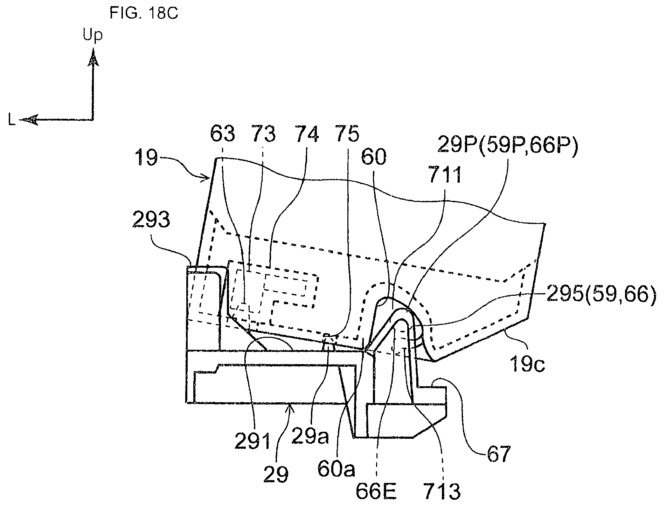

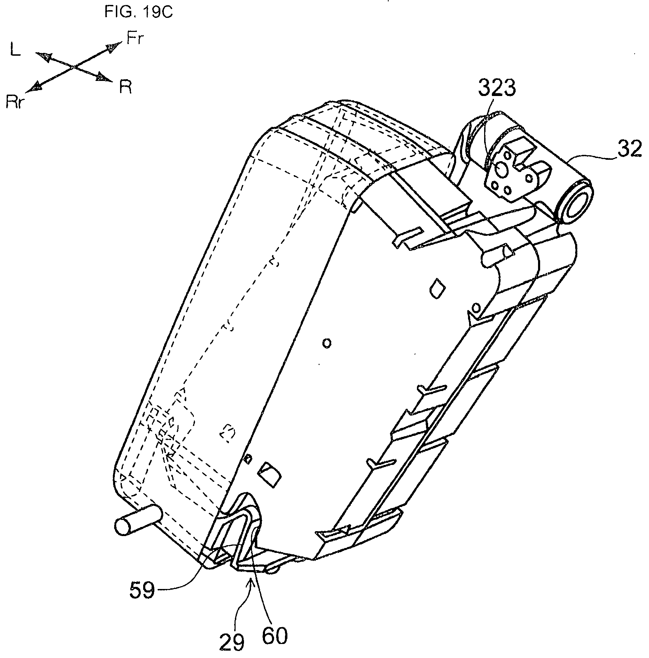

Subsequently, the battery pack 19 (which has been tentatively placed in the inclined posture) is tilted up toward the left side of the vehicle, to be put into an upright state. During this operation, as shown in Figs. 18C and 19C, the position of the battery pack 19 relative to the terminal base 29 is changed with corner portions 60a of the end engagement recesses 60 acting as fulcrums, and the surface 19c is separated from the shelf 67 of the terminal base 29. The wall parts forming the end engagement recesses 60 each have a portion shaped to roughly coincide with the curve of the arc-shaped locus along which the peak portion 29P is moved in the course of transition of the battery pack 19 from the tentatively placed position to the upright position, in order not to hamper the movement of the battery pack 19 along the arc-shaped locus.

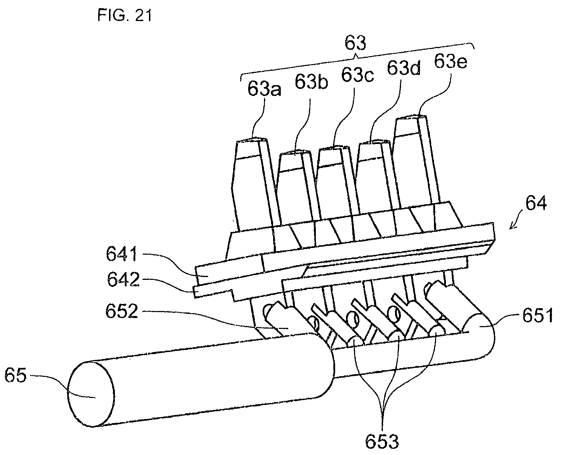

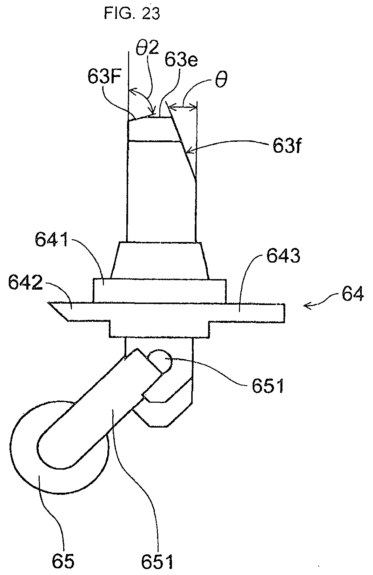

In the position shown in Figs. 18C and 19C, the male-side terminals 63 projecting upwardly from the terminal base 29 start being engaged with the insulator block 74 accommodating the female-side terminals 73 of the battery pack 19. The tips of the male-side terminals 63 are bevelled on the left side relative to the vehicle (on the depth side in the battery insertion direction). This ensures that the tips of the male-side terminals 63 are prevented from abutting against a corner portion of the opening of the insulator block 74 (a corner portion of the opening by which the male-side terminals 63 are guided to an insertion port for insertion into the female-side terminals 73). The detailed shape of the male-side terminals 63 will be described later with reference to Figs. 21 and 23, etc.

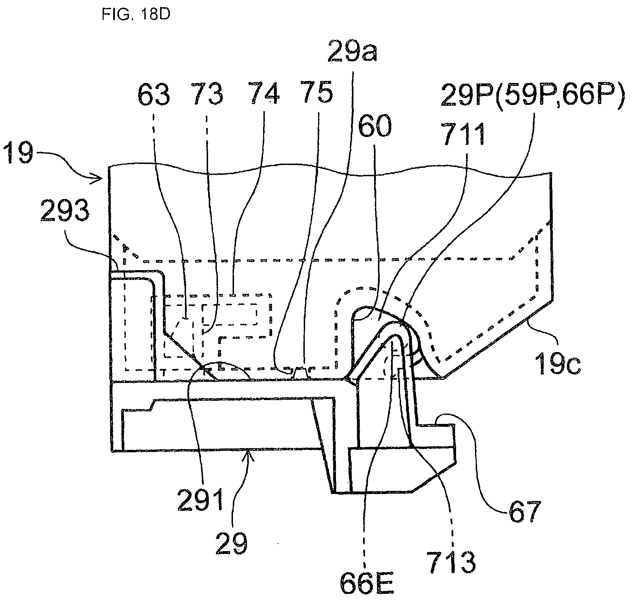

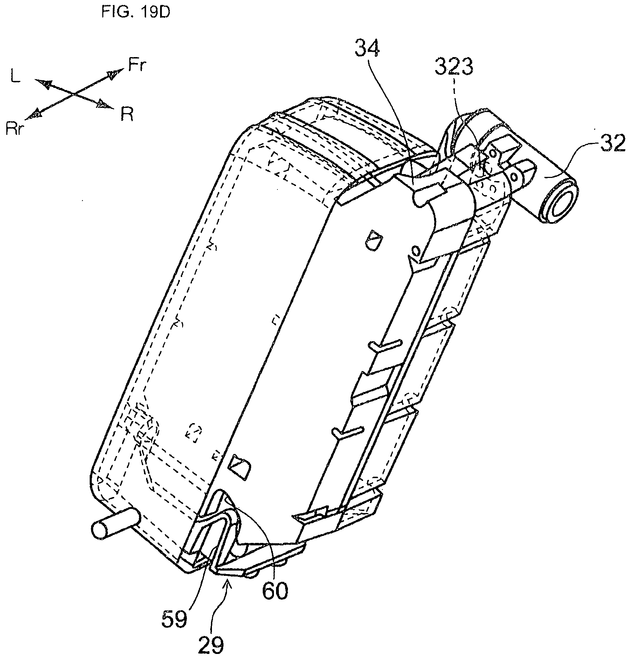

In Figs. 18D and 19D, the battery pack 19 is seated on the terminal base 29. In other words, the battery pack 19 is in a completely mounted position relative to the vehicle body. In this position, the bottom surface of the battery pack 19 is in contact with the upper surface of the base 292, and the male-side terminals 63 are in electrical contact with the female-side terminals 73. In this position, besides, the engagement hole 62 formed in the front wall 76 of the handle 34 of the battery pack 19 faces the lock pin 323 of the lock device 32. Thus, when the key is inserted into the key hole of the lock device 32 and turned to a predetermined lock position, the lock pin 323 protrudes and fits into the engagement hole 62. As a result, the battery pack 19 situated on the terminal base 29 is locked to the main frame 3 of the motorcycle 1.

In the position where the battery pack 19 is seated on the terminal base 29, the stopper 66E projecting from the peak portion 66P of the central engagement projection 66 of the battery pack support part 295 is in engagement with the inner circumferential surfaces (upper side surfaces) of the link part 713 between the parts 711 and 712 of the rib 71 and the link part 723 between the parts 721 and 722 of the rib 72. This ensures that the battery pack 19 is restrained in position in the vertical direction.

Further, the position of the battery pack 19 on the terminal base 29 in the direction parallel to the upper surface of the base 292 is restrained by those contact portions of the end engagement recesses 60, 60 and the central engagement recess 70 which make contact with the end engagement projections 59, 59 and the central engagement projection 66. In addition, the position is also restrained by the fitting between the cutout 75 formed in a bottom portion of the front part 20F of the battery case 20 and the projecting part 29a on the terminal base 29.

To detach the battery pack 19 from the terminal base 29 and the battery pack cover 28, operations reverse to the above-mentioned operations are carried out. Specifically, the lock device 32 is operated with the key, to retract the lock pin 323 from the engagement hole 62. The battery pack 19 can then be tilted to the right side of the vehicle body. When the upper side of the battery pack 19 is tilted to the right of the vehicle by gripping the handle 34 and the battery pack 19 is pulled upward, therefore, the battery pack 19 can be detached from the motorcycle 1.

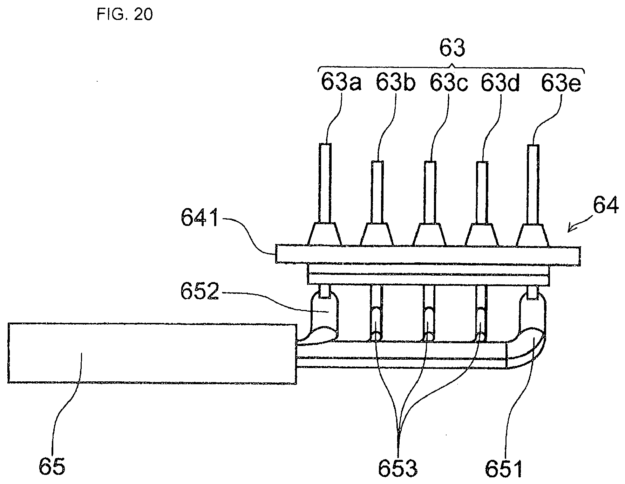

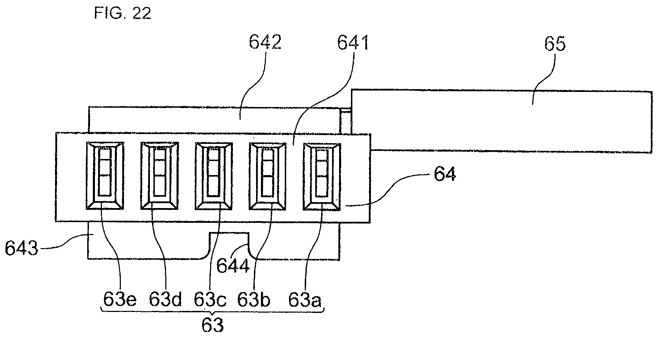

Fig. 20 is a view of a male-side terminal unit from the right side of the vehicle body, Fig. 21 is a perspective view of the male-side terminal unit from a rear right lower side of the vehicle body, Fig. 22 is a plan view of the male-side terminal unit, and Fig. 23 is a view of the male-side terminal unit from the front side of the vehicle body. In Figs. 20 to 23, a plurality of male-side terminals 63 (here, five) are provided, and they are arrayed in the longitudinal direction of the vehicle.

Of the plurality of male-side terminals 63, two (63a and 63e) are power terminals which are connected respectively to the plus side and the minus side of the battery pack 19, and the remaining ones (63b, 63c and 63d) are signal line terminals which are connected to signal lines. The power terminals 63a, 63e are disposed such that their tips are located above the tips of the signal line terminals 63b, 63c and 63d. This ensures that during connection, the power terminals 63a, 63e are electrically connected to the female-side terminals 73 before the connection of the signal line terminals 63b, 63c and 63d. This contributes to enhancement of durability of the power terminals 63a, 63e and the female-side terminals 73.

As shown in Fig. 23, at the tip of the male-side terminal 63, the corner 63f on the left side relative to the vehicle is obliquely bevelled at an angle θ relative to the lengthwise direction of the male-side terminal 63. Further, the corner 63F on the right side relative to the vehicle is bevelled at an angle θ2, greater than the angle θ, relative to the lengthwise direction of the male-side terminal 63. The bevel length L at the corner 63f is greater than the bevel length L2 at the corner 63F. In other words, the corner 63f is cut more than the corner 63F. Thus, the tip of the male-side terminal 63 is tapered off.

The bevel at the corner 63F is provided so during connection of the male-side terminal 63 to the female-side terminal 73, the contact of the male-side terminal 63 to the female-side terminal 73 is started not with a point but with a surface. On the other hand, the bevel at the corner 63f is provided to ensure a clearance and to prevent the tip of the male-side terminal from touching or being caught on the corner of the insulator block 74, during initial contact of the male-side terminal 63 with the female-side terminal 73.

The number of signal line terminals is not limited to three, and may be increased or decreased, as required. Alternatively, the number of the signal line terminals may be fixed, for example, to five, and all or some of them may be used according to situations, for example, the model and type of the motorcycle 1.

The male-side terminal 63 is provided to orthogonally penetrate the insulator board 64. Electric wires 651 and 652 or signal lines 653, 653, 653 branched from the harness 65 are connected to the portion of the male-side terminal 63 which is located below the insulator board 64.

The insulator board 64 includes a main part 641 to be fitted into the opening 291 formed in the terminal base 29, a right-side edge 642 projecting from the main part 641 towards the right relative to the vehicle, which is to be clamped between the main part 641 and the upper guides 298 of the terminal base 29, and a left-side edge 643 projecting from the main part 641 towards the left relative to the vehicle, which is to be engaged with the stopper 300 extending from the terminal base 29. The left-side edge 643 is formed with a recess 644. The tip of the stopper 300 comes around to the upper side of the lower guide 301 of the insulator board 64 while avoiding the recess 644. The insulator board 64 is fixed by being clamped between the stopper 300 and the lower guide 301 of the terminal base 29 (see also Figs. 8 and 9).

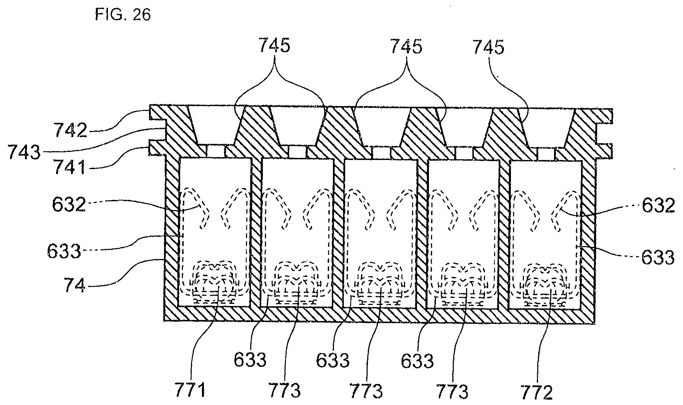

Fig. 24 is a perspective view of the insulator block 74 with the female-side terminals 73 accommodated therein, as viewed from a right lower front side of the vehicle body, Fig. 25 is a perspective view of the same as viewed from a left upper rear side, and Fig. 26 is a sectional view of the insulator block 74, as viewed from a left side of the vehicle body, showing contact parts of the female-side terminals 73.

As shown in Figs. 24 to 26, the insulator block 74 is formed in its upper portion with a plurality openings 745 (here, five) in which to insert the plurality of male-side terminals 63 (63a to 63e). The opening 745 is rectangular in cross-section, and has taper surfaces such that the area of the aperture reduces with increasing depth. The female-side terminal 73 is located on the narrower side of the opening 745. The female-side terminal 73 has a connection part 633 which extends from two connection parts 632 and 632, which can clamp the inserted male-side terminal 63 from two sides (as shown in Fig. 26), and which is connected to electric wires 771 and 772 or a signal line 773.

At the outer circumference of the part surrounding the openings 745, flange parts 741 and 742 are formed, by means of which the circumferential edge of the opening 103 formed in the bottom portion of the battery case 20 is clamped from the inside and the outside of the bottom chamber 20B. The part 743 located between the flange parts 741 and 742 has dimensions which allow it to conform to the inner edge of the opening 103.

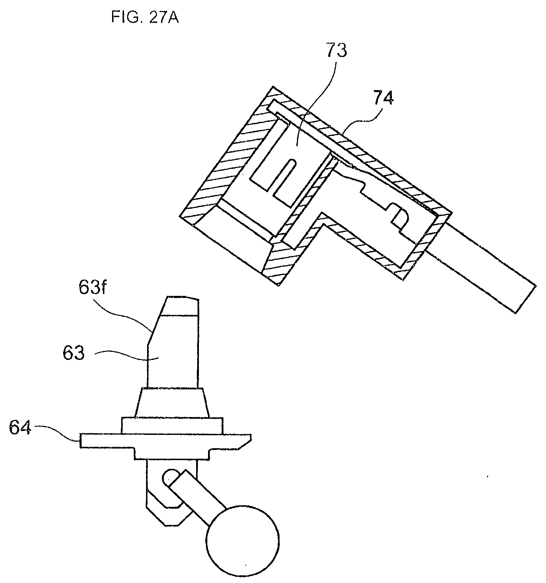

Now, the positional relationship between the male-side terminals 63 and the female-side terminals 73 corresponding to the positional relationship between the battery pack 19 and the terminal base 29 will be described below. Figs. 27A to 27E are sectional views showing the positional relationship between the male-side terminal 63 and the female-side terminal 73, as viewed from the rear side of the vehicle body. First, in Fig. 27A, the insulator block 74 with the female-side terminal 73 accommodated therein is brought closer to the male-side terminal 63 from a right upper side of the vehicle body.

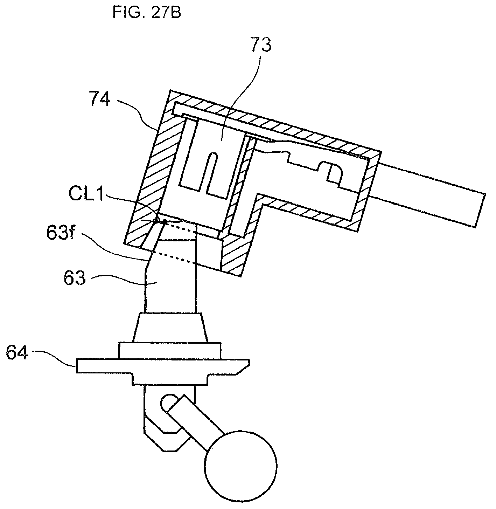

In Fig. 27B, the tip of the male-side terminal 63 is in such a position that it is partly inserted into the insulator block 74. Since the opening 745 of the insulator block 74 is formed with a taper, a large clearance CL1 is maintained between the corner 63f formed by obliquely cutting the tip of the male-side terminal 63 and.the insulator block 74.

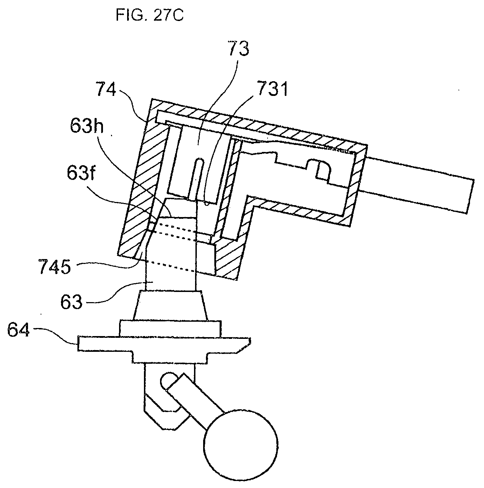

In Fig. 27C, the tip of the male-side terminal 63 is in contact with the end portion of the female-side terminal 73 inside the insulator block 74 which is closest to the opening 745. In this position, the corner 63f of the male-side terminal 63 and the taper surface of the opening 745 of the insulator block 74 are roughly parallel to each other.

A tip portion of the male-side terminal 63 is shaped so that plate thickness decreases toward the tipmost portion. A ridgeline 63h exists at the boundary between the thinned portion and the portion where the plate thickness is maintained.

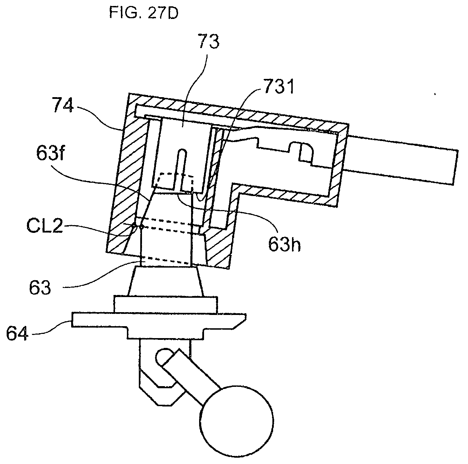

In Fig. 27D, the ridgeline 63h at the tip portion of the male-side terminal 63 and the end portion 731 of the female-side terminal 73 are roughly parallel to each other. In this instance, the clearance CL2 between the corner 63f of the male-side terminal 63 and the insulator block 74 is smaller than the clearance CL1. However, the male-side terminal 63 and the insulator block 74 are not in contact with each other.

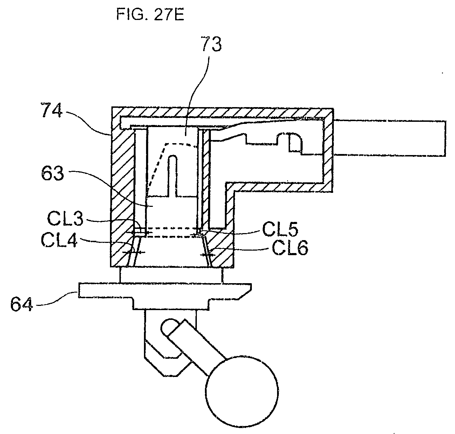

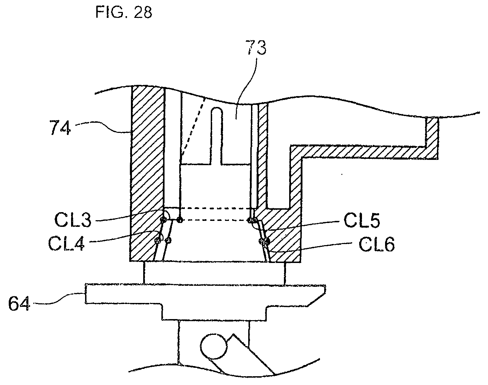

In Fig. 27E, there is shown a connected state where the battery pack 19 is mounted on the terminal base 29 in the position as shown in Fig. 18D. In this state, the male-side terminal 63 has entered into the female-side terminal 73, and the connection has been completed. In this state, on one side of the male-side terminal 63 (to the left of the vehicle), clearances CL3 and CL4 are maintained between the male-side terminal 63 and the insulator block 74. On the other side of the male-side terminal 63 (to the right of the vehicle), clearances CL5 and CL6 are also maintained, but these are smaller than the clearances CL3 and CL4. Fig. 28 is an enlarged view of a part of Fig. 27E, and shows these clearances in more detail.

The handle 34 formed on the upper portion of the battery case 20 is offset toward the right side of the battery pack 19. Therefore, the middle chamber 20M (the first accommodation part, which serves as the battery cell accommodating part) can be located just under the main frame 3 of the motorcycle 1, while the handle 34 itself is located to the right side of the main frame 3 and can be raised up to such a position as to overlap with the main frame 3 in a side view of the vehicle body. With the handle 34 thus located at an upper position, the middle chamber 20M can be enlarged, and more battery cells can be accommodated therein.

Further, while the main frame 3 of the motorcycle 1 is a monocoque-type frame, the frame is not restricted to this design. An under frame extending downward from the head pipe 2 to be joined at its rear end to lower end portions of the pivot plates 4 may be provided.

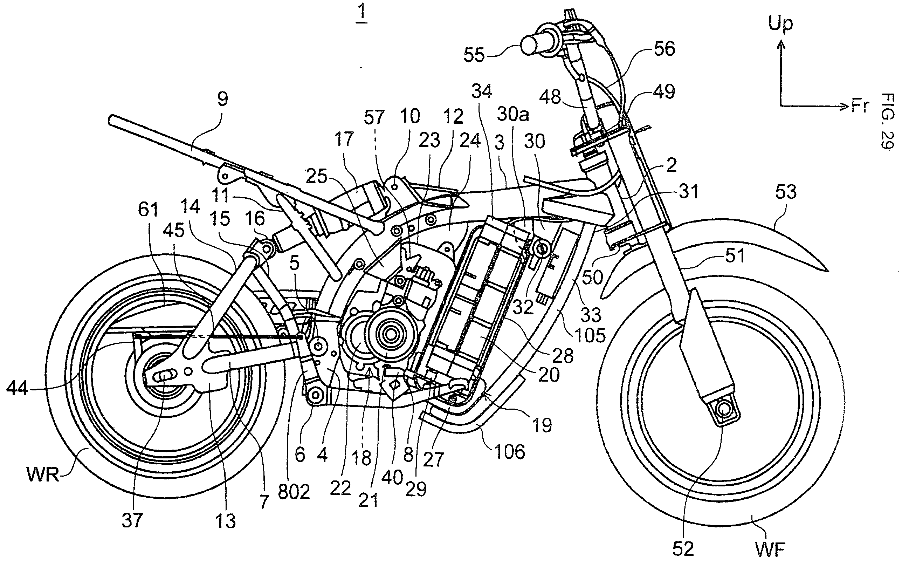

Fig. 29 is a right side view of the motorcycle 1 provided with an under frame. In Fig. 29, a skid plate 106 is provided on the front of the under frame 105. The skid plate 106 covers at least a front lower side of the battery pack 19. However, it is preferable for the skid plate 106 to extend from the front side of the under frame 105 to the motor case 23. This protects the battery pack 19 and the motor case 23 from small stones, sand, mud, water, etc., flying from the front and lower sides of the motorcycle 1. Incidentally, where the under frame 105 is provided, as shown in Fig. 29, the PDU 33 can be mounted to the under frame 105 instead of to the bracket 31.

Further, in Fig. 29, a lock device support stay 30 for fixing the lock device 32 can extend toward the rear of the vehicle to form a part 30a, and an upper portion of the battery pack cover 28 can be connected by the thus extended part 30a. Thus, the battery cover 28 can be supported at its lower portion by the battery pack holding stay 27 extending from the motor case 23, and at its upper portion by the lock device support stay 30.

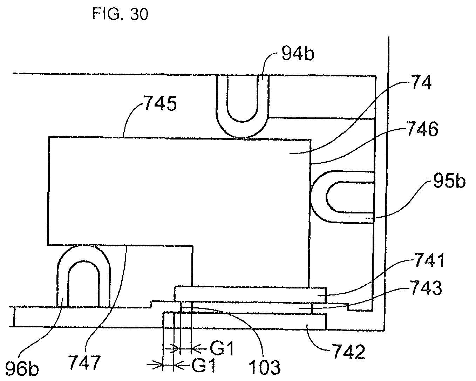

Fig. 30 is an enlarged view of a part of Fig. 13. In Fig. 30, the intermediate part 743 of the insulator block 74 which is located between the two flanges 741 and 742 at an end portion of the insulator block 74 is loosely fitted in the opening 103. In other words, the dimensions of the intermediate part 743 and the opening 103 are set so that a gap G1 is formed between the outer circumferential surface of the intermediate part 743 and the inner circumferential surface of the opening 103. The dimensions of the flange 742 and the opening 103 are set so that a gap G1 is also generated between the flange 742 and the opening 103. Incidentally, it is recommended for the gap G1 to be provided at each of the four sides of the outer circumferential surface of the intermediate part 743, so that the insulator block 74 can be displaced in four directions along the bottom surface of the battery case 20. The ribs 94b, 95b and 96b (and also the opposed ribs 95a, 95b and 95c) which protrude from the wall part of the battery case 20 are located to contact outer surfaces 745, 746 and 747 of the insulator block 74; in addition, these ribs are disposed while setting the positional relationship thereof with the insulator block 74 in such a manner that the insulator block 74 can be displaced rightward in Fig. 30 within the range of the gap G1.

## Claims

1. A power supply device for an electric vehicle, which comprises a battery case (20) for accommodating battery cells for supplying electric power to an electric motor (21) of an electric vehicle (1) and which can be mounted to and detached from the electric vehicle (1),
wherein the power supply device further comprises:
an insulator block (74) for accommodating battery case terminals (73) which can be connected to vehicle body terminals provided on a body of the electric vehicle (1), and
a plurality of ribs (94a, 95a, 96a, 94b, 95b, 96b) protruding inwardly from a wall of the battery case (20) and disposed along an outer surface of the insulator block (74) with a predetermined gap between themselves and the outer surface, in order to hold the insulator block (74) inside the battery case (20);
wherein the battery case (20) is provided with an opening (103) through which a part of the insulator block (74) passes so that the battery case terminals (73) are exposed to the outside; and
wherein that part of the insulator block (74) which passes through the opening (103) is provided with two flanges (741, 742) making contact with an inner edge of the opening (103) from the inside and outside of the battery case (20), such that an outer circumferential surface of an intermediate part defined between the two flanges (741, 742) is loosely fitted in the opening (103) with a gap (G1) therebetween.

2. The power supply device for electric vehicle according to claim 1,
wherein the battery case (20) is provided further with:
a fuse (99) which is located to the side of a harness (105) extending from the battery case side terminals (73) and which is connected to the harness (105); and
a plurality of projecting parts (98a, 98b, 99b, 100b) for holding the fuse (99).

3. The power supply device for electric vehicle according to claim 1 or 2,
wherein the battery case (20) is comprised of a case front part (20F) located to the front of the vehicle when the battery case (20) is mounted on the electric vehicle (1), and a case rear part (20Rr) located to the rear of the vehicle when the battery case (20) is mounted on the electric vehicle (1);
a first accommodation part (20M) for accommodating the battery cells, and a second accommodation part (20B) located below the first accommodation part (20M) for accommodating the fuse (99) and the insulator block (74), are partitioned from each other; and
the space defined between the front part (20F) and case rear part (20Rr) which forms the first accommodation part (20M) is sealed with a seal member.

4. The power supply device for electric vehicle according to any preceding claim, wherein the battery case (20) is provided with a drain hole (75) in a lower wall of the second accommodation part (20B).

5. The power supply device for electric vehicle according to any preceding claim, wherein the fuse (99) is disposed in proximity to the wall (84) of the second accommodation part (20B) which is nearest to the first accommodation part (20M).

6. An electric vehicle with a power supply device as claimed in any preceding claim.

## Patentansprüche

1. Stromversorgungsvorrichtung für ein elektrisches Fahrzeug, das ein Batteriegehäuse (20) umfasst, um Batteriezellen unterzubringen, um damit den elektrischen Motor (21) eines elektrisches Fahrzeugs (1) mit elektrischer Energie zu versorgen, und das an dem elektrischen Fahrzeug (1) befestigt und davon abgenommen werden kann,
wobei die Stromversorgungsvorrichtung ferner umfasst:
einen Isolationsblock (74), um Batteriegehäuseanschlüsse (73) unterzubringen, die mit den Fahrzeugkörperanschlüssen, die auf einem Körper des elektrischen Fahrzeugs (1) bereitgestellt sind, verbunden werden können, und
mehrere Rippen (94a, 95a, 96a, 94b, 95b, 96b), die von einer Wand des Batteriegehäuses (20) aus nach innen vorstehen und entlang einer äußeren Oberfläche des Isolationsblocks (74) mit einer vorgegebenen Lücke zwischen diesen selbst und der äußeren Oberfläche angeordnet sind, um den Isolationsblock (74) innerhalb des Batteriegehäuses (20) zu halten;
wobei das Batteriegehäuse (20) mit einer Öffnung (103) versehen ist, durch die ein Teil des Isolationsblocks (74) derart hindurchtritt, dass die Batteriegehäuseanschlüsse (73) nach außen freiliegen;
und
wobei derjenige Teil des Isolationsblocks (74), der durch die Öffnung (103) hindurchtritt, mit zwei Flanschen (741, 742) versehen ist, die einen Kontakt mit einer inneren Kante der Öffnung (103) von dem Inneren und dem Äußeren des Batteriegehäuses (20) derart herstellen, dass eine äußere Umfangsoberfläche eines Zwischenteils, das zwischen den zwei Flanschen (741, 742) definiert ist, locker in die Öffnung (103) mit einer Lücke (G1) dazwischen eingepasst ist.

2. Stromversorgungsvorrichtung für ein elektrisches Fahrzeug nach Anspruch 1, wobei das Batteriegehäuse (20) ferner versehen ist mit:
einer Sicherung (99), die an der Seite eines Leitungssatzes (105), der sich von den seitlichen Batteriegehäuseanschlüssen (73) erstreckt, angeordnet ist und die mit dem Leitungssatz (105) verbunden ist;
und
mehrere überstehende Teile (98a, 98b, 99b, 100b), um die Sicherung (99) zu halten.

3. Stromversorgungsvorrichtung für ein elektrisches Fahrzeug nach Anspruch 1 oder 2, wobei das Batteriegehäuse (20) aus einem Gehäusevorderteil (20F), das an der Vorderseite des Fahrzeugs angeordnet ist, wenn das Batteriegehäuse (20) auf dem elektrischen Fahrzeug (1) befestigt ist, und aus einem hinteren Gehäuseteil (20Rr), das an der Rückseite des Fahrzeugs angeordnet ist, wenn das Batteriegehäuse (20) auf dem elektrischen Fahrzeug (1) befestigt ist, zusammengesetzt ist;
wobei ein erstes Unterbringungsteil (20M), um die Batteriezellen unterzubringen, und ein zweites Unterbringungsteil (20B), das unter dem ersten Unterbringungsteil (20M) angeordnet ist, um die Sicherung (99) und den Isolationsblock (74) unterzubringen, voneinander getrennt sind; und
wobei der Raum, der zwischen dem Gehäusevorderteil (20F) und dem hinteren Gehäuseteil (20Rr) definiert ist und das erste Unterbringungsteil (20M) bildet, mit einem Abdichtungselement abgedichtet ist.

4. Stromversorgungsvorrichtung für ein elektrisches Fahrzeug nach einem vorhergehenden Anspruch, wobei das Batteriegehäuse (20) mit einer Ablassöffnung (75) in einer unteren Wand des zweiten Unterbringungsteils (20B) versehen ist.

5. Stromversorgungsvorrichtung für ein elektrisches Fahrzeug nach einem vorhergehenden Anspruch, wobei die Sicherung (99) in der Nähe der Wand (84) des zweiten Unterbringungsteils (20B) angeordnet ist, die dem ersten Unterbringungsteil (20M) am nächsten ist.

6. Elektrisches Fahrzeug mit einer Stromversorgungsvorrichtung nach einem vorhergehenden Anspruch.

## Revendications

1. Dispositif d'alimentation électrique pour un véhicule électrique, qui comprend un boîtier de batterie (20) pour recevoir des éléments de batterie pour fournir de l'énergie électrique à un moteur électrique (21) d'un véhicule électrique (1) et qui peut être monté sur le véhicule électrique (1) et en être détaché,
dans lequel le dispositif d'alimentation électrique comprend en outré :
un bloc isolant (74) pour recevoir des bornes (73) du boîtier de batterie, qui peuvent être connectées à des bornes de carrosserie de véhicule disposées sur une carrosserie du véhicule électrique (1), et
une pluralité de nervures (94a, 95a, 96a, 94b, 95b, 96b) faisant saillie vers l'intérieur d'une paroi du boîtier de batterie (20) et disposées le long d'une surface externe du bloc isolant (74) avec un intervalle prédéterminé entre elles et la surface externe afin de maintenir le bloc isolant (74) dans le boîtier de batterie (20) ;
dans lequel le boîtier de batterie (20) est pourvu d'une ouverture (103) à travers laquelle passe une partie du bloc isolant (74) de sorte que les bornes (73) du boîtier de batterie soient exposées à l'extérieur ; et
dans lequel la partie du bloc isolant (74) qui passe à travers l'ouverture (103) est pourvue de deux brides (741, 742) faisant contact avec un bord interne de l'ouverture (103) de l'intérieur et de l'extérieur du boîtier de batterie (20) de sorte qu'une surface circonférentielle externe d'une partie intermédiaire définie entre les deux brides (741, 742) soit ajustée de manière lâche dans l'ouverture (103) avec un intervalle (G1) entre elles.

2. Dispositif d'alimentation électrique pour un
véhicule électrique selon la revendication 1,
dans lequel le boîtier de batterie (20) est pourvu en outre :
d'un fusible (99) qui est situé sur le côté d'un harnais (105) s'étendant des bornes côté boîtier de batterie (73) et qui est connecté au harnais (105) ; et
d'une pluralité de parties saillantes (98a, 98b, 99b, 100b) pour soutenir le fusible (99).

3. Dispositif d'alimentation électrique pour un véhicule électrique selon la revendication 1 ou 2, dans lequel le boîtier de batterie (20) est constitué d'une partie avant de boîtier (20F) située à l'avant du véhicule lorsque le boîtier de batterie (20) est monté sur le véhicule électrique (1) et d'une partie arrière de boîtier (20Rr) située à l'arrière du véhicule lorsque le boîtier de batterie (20) est monté sur le véhicule électrique (1) ;
une première partie réceptrice (20M) pour recevoir les éléments de batterie et une seconde partie réceptrice (20B) située en dessous de la première partie réceptrice (20M) pour recevoir le fusible (99) et le bloc isolant (74) sont séparées l'une de l'autre ; et
l'espace défini entre la partie avant (20F) et la partie arrière de boîtier (20Rr) qui forme la première partie réceptrice (20M) est scellé avec un élément d'étanchéité.

4. Dispositif d'alimentation électrique pour un véhicule électrique selon l'une quelconque des revendications précédentes, dans lequel le boîtier de batterie (20) est pourvu d'un trou d'évacuation (75) dans une paroi inférieure de la seconde partie réceptrice (20B).

5. Dispositif d'alimentation électrique pour un véhicule électrique selon l'une quelconque des revendications précédentes, dans lequel le fusible (99) est disposé à proximité de la paroi (84) de la seconde partie réceptrice (20B) qui est la plus proche de la première partie réceptrice (20M).

6. Véhicule électrique pourvu d'un dispositif d'alimentation électrique selon l'une quelconque des revendications précédentes.
